# EUROPEAN PATENT APPLICATION

(11) **EP 4 525 083 A1**
(43) Date of publication of application: **19.03.2025**
(21) Application number: 24173003.5
(22) Date of filing: 29.04.2024
(51) Int. Cl.: H01M 4/36, H01M 4/38, H01M 4/58, H01M 4/62, H01M 10/0562, H01M 10/052, H01M 4/02

(54) **DRY CATHODE FILM, DRY CATHODE COMPRISING DRY CATHODE FILM AND ALL-SOLID SECONDARY BATTERY COMPRISING DRY CATHODE FILM**

(30) Priority: 14.09.2023 KR 20230122658
(71) Applicant: Samsung SDI Co., Ltd., Yongin-si, Gyeonggi-do 17084 (KR)
(72) Inventor: Jo, Sungnim, 17084 Gyeonggi-do (KR); Son, Inhyuk, 17084 Gyeonggi-do (KR); Park, Taehyun, 17084 Gyeonggi-do (KR); Lim, Hyungsub, 17084 Gyeonggi-do (KR); Shim, Kyueun, 17084 Gyeonggi-do (KR); Lee, Jieun, 17084 Gyeonggi-do (KR)
(74) Representative: Michalski Hüttermann & Partner Patentanwälte mbB

(57) **Abstract**

A dry cathode film and a dry cathode and an all-solid secondary battery, each including the same. The dry cathode film includes a dry cathode active material, a dry sulfide-based solid electrolyte, and a dry binder, wherein the dry cathode active material includes a composite of Li₂S, a lithium salt (LiₐX_{b}), and a carbonaceous material (C), the composite is represented by Li₂S-LiₐX_{b}-C (wherein 1≤a≤5 and 1≤b≤5), and the X is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BOs, PO₄, NCl, NCl₂, BN₂, or a combination thereof.

## Description

### CROSS-REFERENCE TO RELATED APPLICATION

The present application claims priority to and the benefit of Korean Patent Application No. 10-2023-0122658, filed on September 14, 2023, in the Korean Intellectual Property Office, the entire content of which is incorporated herein by reference.

### BACKGROUND

### 1. Field

Embodiments of the present disclosure described herein are related to a dry cathode film, and a dry cathode and an all-solid secondary battery, each including the dry cathode film.

### 2. Description of the Related Art

To meet miniaturization and high performance of one or more suitable devices, high energy density of secondary batteries is becoming important as well as miniaturization and weight reduction. For example, high-capacity secondary batteries are becoming important.

An excessive amount of an organic solvent may be utilized to manufacture an electrode that is manufactured from a solvent-containing slurry. Thus, dry methods excluding the need such organic solvent are being studied in manufacturing electrodes.

### SUMMARY

Aspects according to one or more embodiments are directed toward a dry cathode film having improved mechanical properties and reduced specific resistivity by including a Li₂S-lithium salt-carbonaceous material composite and a dry binder that binds these substances.

Aspects according to one or more embodiments are directed toward a dry cathode including the dry cathode film.

Aspects according to one or more embodiments are directed toward an all-solid secondary battery including the dry cathode film.

Additional aspects will be set forth in part in the description which follows and, in part, will be apparent from the description, or may be learned by practice of the presented embodiments of the present disclosure.

According to one or more embodiments, a dry cathode film includes:
a dry cathode active material, a dry sulfide-based solid electrolyte, and a dry binder,
wherein the dry cathode active material includes a composite of Li₂S, a lithium salt (LiₐX_{b})
the composite is represented by Li₂S-LiₐX_{b}-C (wherein 1≤a≤5 and 1≤b≤5), and
X is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCl, NCl₂, BN₂, or any combination thereof.

According to one or more embodiments, a dry cathode includes:
a cathode current collector, and
the above-described dry cathode film disposed on at least one side (e.g., one or both (e.g., opposite) sides) of the cathode current collector.

According to one or more embodiments, an all-solid secondary battery includes:
a cathode, an anode, and an electrolyte layer disposed between the cathode and the anode,
wherein the cathode is the above-described dry cathode, and
the anode includes an anode current collector and a first anode active material layer disposed on at least one side of the anode current collector.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a cross-sectional view of an all-solid secondary battery according to embodiments;
FIG. 2 is a cross-sectional view of an all-solid secondary battery according to embodiments;
FIG. 3 is a cross-sectional view of an all-solid secondary battery according to embodiments;
FIG. 4 is a cross-sectional view of an all-solid secondary battery according to embodiments;
FIG. 5 is a cross-sectional view of an all-solid secondary battery according to embodiments;
FIG. 6 is a cross-sectional view of an all-solid secondary battery according to embodiments; and
FIG. 7 is a cross-sectional view of an all-solid secondary battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized herein have the same meaning as commonly understood by one of ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments will be described herein with reference to schematic cross-sectional view of ideal embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing. For example, a region illustrated or described as flat may, typically, have rough and/or nonlinear features. Moreover, sharp angles illustrated in the drawings may be rounded. Thus, the regions illustrated in the drawings are schematic in nature and their shapes are not intended to illustrate the actual shape of a region of a device and are not intended to limit the scope of claims.

The present disclosure may, however, be embodied in many different forms and should not be construed as limited to the embodiments set forth herein. The embodiments are provided so that the present disclosure will be thorough and complete, and will fully convey the scope of the present disclosure to those skilled in the art. Like reference numerals in the drawings denote like elements.

It will be understood that when one element is referred to as being "on" another element, it may be directly on the other element, or intervening element(s) may also be present therebetween. In contrast, when one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed could be termed a second element, component, region, layer or section without departing from the teachings herein.

The terms utilized herein is for the purpose of describing embodiments only and is not intended to be limiting of the present disclosure. As utilized herein, an expression utilized in the singular may encompass the expression "at least one", unless otherwise indicated. The "at least one" should not be construed as singular. As utilized herein, the term "and/or" may include any and all combinations of one or more of the associated listed items. The terms such as "including" and/or "having" are intended to indicate the existence of features, regions, integers, processes, components, and/or elements disclosed in the specification, and are not intended to preclude the possibility that one or more other features, regions, integers, processes, components, and/or elements thereof may exist or may be added. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

Spatially relative terms, such as "under", "below", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilize or operation, in addition to the orientation depicted in the drawings. For example, if (e.g., when) the device in the drawings is turned over, elements described as "below" other elements or features would then be oriented "above" the other elements or features. Thus, the example term "below" may encompass both (e.g., simultaneously) an orientation of above and below. The device may be otherwise oriented (rotated 90 degrees or at other orientations) and the spatially relative descriptors utilized herein may be interpreted accordingly.

In the present disclosure, the term "dry" or "dried" may refer to a state intended not to be in contact with a solvent such as a processing solvent or a state intended not to include a solvent. For example, the dry cathode active material may refer to a cathode active material intended not to be in contact with a solvent or a cathode active material intended not to include a solvent. For example, the dry solid electrolyte may refer to a solid electrolyte intended not to be in contact with a solvent or a solid electrolyte intended not to include a solvent. For example, the dry conductive material may refer to a conductive material intended not to be in contact with a solvent or a conductive material intended not to include a solvent. For example, the dry binder may refer to a binder intended not to be in contact with a solvent or a binder intended not to include a solvent. For example, a binder that is not mixed with a solvent but is in a liquid state at room temperature may be a dry binder.

In the present disclosure, the term "Group" may refer to a group of elements in the periodic table numbered from 1 to 18 classified according to a classification system of The International Union of Pure and Applied Chemistry ("IUPAC").

In the present disclosure, a "particle diameter" of particles may indicate an average diameter of spherical particles or an average length of major axes of non-spherical particles. Particle diameters may be measured utilizing a particle size analyzer (PSA). The "particle diameter" may be, for example, an average particle diameter. The "average particle diameter" may be, for example, a median particle diameter (D50).

D50 may refer to a particle diameter corresponding to 50 % of the particles in a cumulative distribution curve measured by a laser diffraction method in which particles are accumulated in the order of particle diameter from the smallest particle to the largest particle.

D90 may refer to a particle diameter corresponding to 90 % of the particles in a cumulative distribution curve measured by a laser diffraction method in which particles are accumulated in the order of particle diameter from the smallest particle to the largest particle.

D10 may refer to a particle diameter corresponding to 10 % of the particles in a cumulative distribution curve measured by a laser diffraction method in which particles are accumulated in the order of particle diameter from the smallest particle to the largest particle.

In the present disclosure, the term "metal" may include metals and metalloids such as silicon and germanium in an elemental or ionic state.

In the present disclosure, the term "alloy" may refer to a mixture of two or more metals.

In the present disclosure, the term "electrode active material" may refer to a material for electrodes allowing lithiation and delithiation.

In the present disclosure, the term "cathode active material" may refer to a material for cathodes allowing lithiation and delithiation.

In the present disclosure, the term "anode active material" may refer to a material for anodes allowing lithiation and delithiation.

In the present disclosure, the terms "lithiation" and "lithiating" may refer to a process of adding lithium to an electrode active material.

In the present disclosure, the terms "delithiation" and "delithiating" may refer to a process of removing lithium from an electrode active material.

In the present disclosure, the terms "charging" and "charge" may refer to a process of supplying electrochemical energy to a battery.

In the present disclosure, the terms "discharging" and "discharge" may refer to a process of removing electrochemical energy from a battery.

In the present disclosure, the terms "cathode" and "positive electrode" may refer to an electrode in which electrochemical reduction and lithiation occur during discharging.

In the present disclosure, the terms "anode" and "negative electrode" may refer to an electrode in which electrochemical oxidation and delithiation occur during discharging.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The terms "fibril" or "fibrils" as utilized herein refer to the fibrous shape of a substance that has a larger aspect ratio than a particulate of said substance. As utilized herein, the terms "fibrillized" and "fibrillize" refer to a process of converting (e.g., by grinding or pulverizing) particulates of a substance into fibrous shape (i.e., fibrils) of said substance that has higher aspect ratio than the particulates.

While some embodiments have been described, alternatives, modifications, variations, improvements, and substantial equivalents that are or may be presently unforeseen may arise to applicants or others skilled in the art. The appended claims as filed and as they may be amended are intended to embrace all such alternatives, modification, variations, improvements, and substantial equivalents.

Hereinafter, a dry cathode film, a dry cathode and an all-solid secondary battery, each including the same, according to embodiments will be described in more detail.

### Dry Cathode Film

### Dry Cathode Film: Composite of Li₂S, Lithium Salt, and Carbonaceous Material

A dry cathode film according to embodiments may include a dry cathode active material, a dry sulfide-based solid electrolyte, and a dry binder. The dry cathode active material may include a Li₂S-lithium salt-carbonaceous material composite.

By including the Li₂S-lithium salt-carbonaceous material composite, the dry cathode active material may provide increased discharge capacity, enhanced ionic conductivity, and improved electronic conductivity. Providing of a lithium source may not need to be provided (e.g., may be excluded) in an anode, because the composite includes Li₂S which may act as the lithium source. As a result, energy density of the all-solid secondary battery may be increased. However, sulfur (i.e., S) does not include lithium and cannot act as a lithium source, and thus it may be critical or essential to provide a lithium source in the anode. Ionic conductivity of the dry cathode active material may be improved, and internal resistance of a dry cathode film including the dry cathode active material may be reduced because the composite includes the lithium salt. As a result, cycle characteristics of an all-solid secondary battery including the dry cathode film may be improved. Electronic conductivity of the dry cathode active material may be improved and internal resistance of a dry cathode film including the dry cathode active material may be reduced because the composite includes the carbonaceous material. As a result, cycle characteristics of an all-solid secondary battery including the dry cathode film may be improved. Binding strength between the composite and the dry binder may further be improved because the composite includes the carbonaceous material. Therefore, mechanical properties such as tensile strength of the dry cathode film may further be improved. The dry binder discontinuously binds to portions of surfaces of a plurality of dry cathode active material particles, and thus an increase in internal resistance of the dry cathode film may be effectively inhibited by the dry binder. However, a wet binder is coated on wide areas of surfaces of a plurality of cathode active material particles during a process of being dissolved in a solvent and dried, and thus internal resistance of the dry cathode film may significantly be increased. On the other hand, ionic conductivity of the dry cathode film may further be improved, because the dry cathode film includes the dry sulfide-based solid electrolyte. As a result, internal resistance of the dry cathode film may further be reduced. Specific capacity and/or cycle characteristics of an all-solid secondary battery including the dry cathode film according to the present disclosure may be improved, because internal resistance of the dry cathode film is reduced and mechanical properties thereof are improved.

The Li₂S-lithium salt-carbonaceous material composite may be represented by Li₂S-LiₐX_{b}-C (wherein 1≤a≤5 and 1≤b≤5). X is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCl, NCl₂, BN₂, or any combination thereof. For example, a may be 1, 2, 3, 4, or 5. For example, b may be 1, 2, 3, 4, or 5. C may refer to a carbonaceous material substantially formed of carbon atoms.

Sizes (e.g., an average diameter or an average major axis) of Li₂S crystallites obtained in an X-ray diffraction (XRD) spectrum of the Li₂S-lithium salt-carbonaceous material composite may be, for example, 20 nm or less, 15 nm or less, or 10 nm or less. The sizes of Li₂S crystallites obtained in the XRD spectra of the Li₂S-lithium salt-carbonaceous material composite may be, for example, from about 1 nm to about 20 nm, from about 1 nm to about 15 nm, or from about 3 nm to about 10 nm. A volume change of the Li₂S crystallites may be reduced during charging and discharging, because the Li₂S-lithium salt-carbonaceous material composite includes Li₂S crystallites and the sizes of the Li₂S crystallites are reduced to 20 nm or less. For example, as the size of the Li₂S crystallites decreases, a volume change of one Li₂S crystallite may be reduced resulting in a reduction in the overall volume of the Li₂S-lithium salt-carbonaceous material composite during charging and discharging. For example, grain boundaries between the plurality of Li₂S crystallites easily accommodate the volume change of the Li₂S crystallites during charging and discharging due to the decreased size of the Li₂S crystallite, and thus a volume change of the Li₂S-lithium salt-carbonaceous material composite may be reduced during charging and discharging. The possibility of occurrence of defects such as cracks caused by a volume change of the composite may be reduced during charging and discharging. Cycle characteristics of an all-solid secondary battery including the dry cathode film may be improved, because the dry cathode film includes the Li₂S-lithium salt-carbonaceous material composite. As the sizes of the Li₂S crystallites decrease by 20 nm, a contact area between Li₂S and the lithium salt and/or the carbonaceous material may further be enlarged. Reversibility of electrode reaction may be improved in an all-solid secondary battery including the Li₂S-lithium salt-carbonaceous material composite, because the contact area between Li₂S and the lithium salt and/or carbonaceous material are further enlarged.

The Li₂S-lithium salt-carbonaceous material composite may include, for example, a solid solution of Li₂S and a lithium salt. Ionic conductivity of the Li₂S-lithium salt-carbonaceous material composite may further be improved, because the Li₂S-lithium salt-carbonaceous material composite includes the solid solution of Li₂S and the lithium salt. For example, ionic conductivity of the solid solution of Li₂S and the lithium salt may be enhanced compared to ionic conductivity of Li₂S, because the solid solution of Li₂S and the lithium salt includes lithium atoms located in Li₂S crystallites. As a result, ionic conductivity of the Li₂S-lithium salt-carbonaceous material composite may be improved, and internal resistance of the Li₂S-lithium salt-carbonaceous material composite may be reduced. Internal resistance of the dry cathode film may further be reduced because the dry cathode film includes such a composite. As a result, cycle characteristics of an all-solid secondary battery including the dry cathode film may further be improved.

A Li₂S-lithium salt-carbonaceous material composite may be distinguished from a simple mixture of Li₂S, the lithium salt, and the carbonaceous material. Dense interfaces cannot be maintained among the Li₂S, the lithium salt, and the carbonaceous material in the simple mixture of Li₂S, the lithium salt, and the carbonaceous material, and thus high interfacial resistance is provided, resulting in deterioration of lifespan characteristics of the all-solid secondary battery.

The Li₂S-lithium salt-carbonaceous material composite may include Li₂S. Due to a high theoretical capacity of Li₂S, an all-secondary battery having high energy density may be provided. However, due to low ionic conductivity and/or electronic conductivity of Li₂S, a composite with the lithium salt and the carbonaceous material may be formed to overcome these disadvantages. In the Li₂S-lithium salt-carbonaceous material composite, an amount of Li₂S may be, for example, from about 50 wt% to about 80 wt%, from about 50 wt% to about 75 wt%, or from about 50 wt% to about 70 wt% based on a total weight of the Li₂S-lithium salt-carbonaceous material composite. If (e.g., when) the amount of Li₂S is too high, it may be difficult to increase ionic conductivity and/or electronic conductivity of Li₂S. If (e.g., when) the amount of Li₂S is too low, energy density of a secondary battery may decrease.

The Li₂S-lithium salt-carbonaceous material composite may include a lithium salt. The lithium salt may be, for example, a compound not including sulfur (S). The lithium salt may be, for example, a binary compound or a ternary compound. The lithium salt may be, for example, a binary compound consisting of lithium and one element selected from Groups 13 to 17 of the periodic table. The lithium salt may be, for example, a ternary compound consisting of lithium and two elements selected from Groups 13 to 17 of the periodic table. The binary compound may include, for example, Lil, LiBr, LiCl, LiF, LiH, Li₂O, Li₂Se, Li₂Te, Li₃N, Li₃P, Li₃As, Li₃Sb, Li₃Al₂, LiBs, or any combination thereof. By including such a binary compound, the composite may have further improved ionic conductivity. By including such a composite, i.e., dry cathode active material, the dry cathode film may have further reduced internal resistance. As a result, cycle characteristics of an all-solid secondary battery including the dry cathode film may further be improved. The ternary compound, may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or any combination thereof. By including such a ternary compound, the composite may have improved ionic conductivity. By including such a composite, i.e., dry cathode active material, the dry cathode film may have further reduced internal resistance. As a result, cycle characteristics of an all-solid secondary battery including the dry cathode film may further be improved. In the Li₂S-lithium salt-carbonaceous material composite, an amount of the lithium salt may be from about 1 wt% to about 40 wt%, from about 5 wt% to about 35 wt%, from about 10 wt% to about 35 wt%, from about 15 wt% to about 35 wt%, from about 20 wt% to about 35 wt%, or from about 25 wt% to about 35 wt% based on a total weight of the Li₂S-lithium salt-carbonaceous material composite. If (e.g., when) the amount of the lithium salt is too high, energy density of the all-solid secondary battery may decrease. If (e.g., when) the amount of the lithium salt is too low, ionic conductivity of the Li₂S-lithium salt-carbonaceous material composite may deteriorate, resulting in an increase in internal resistance of the dry cathode film. As a result, cycle characteristics of an all-solid secondary battery including the dry cathode film may deteriorate.

In the Li₂S-lithium salt-carbonaceous material composite, a molar ratio of Li₂S to the lithium salt may be, for example, from about 50:50 to about 95:5, from about 60:40 to about 95:5, from about 60:40 to about 90:10, from about 65:35 to about 90:10, from about 65:35 to about 85:15, or from about 70:30 to about 85:15. In the Li₂S-lithium salt-carbonaceous material composite, a molar ratio of Li₂S to the lithium salt may be, for example, from about 50:50 to about 95:5, from about 50:50 to about 90:10, from about 50:50 to about 85:15, from about 50:50 to about 80:20, from about 50:50 to about 75:25, or from about 50:50 to about 70:30. If (e.g., when) the molar ratio of Li₂S to the lithium salt is within the ranges described above, cycle characteristics of an all-solid lithium battery including the dry cathode film may further be improved. If (e.g., when) the molar ratio of Li₂S is too high, effects of the lithium salt on increasing ionic conductivity may be negligible. If (e.g., when) the molar ratio of Li₂S is too high, energy density of a lithium battery including the composite cathode active material may decrease.

The Li₂S-lithium salt-carbonaceous material composite includes a carbonaceous material. The carbonaceous material may be, for example, any material including carbon atoms and commonly available as conductive materials in the art. The carbonaceous material may be, for example, crystalline carbon, amorphous carbon, or any combination thereof. The carbonaceous material may be, for example, a calcined product of a carbon precursor. The carbonaceous material may be, for example, a carbon nanostructure. The carbon nanostructure may be, for example, a one-dimensional carbon nanostructure, a two-dimensional carbon nanostructure, a three-dimensional carbon nanostructure, or any combination thereof. The carbon nanostructure may be, for example, carbon nanotube, carbon nanofiber, carbon nanobelt, carbon nanorod, graphene, or any combination thereof. The carbonaceous material may be, for example, a porous carbonaceous material or a non-porous carbonaceous material. The porous carbonaceous material may include, for example, periodic and regular two-dimensional or three-dimensional pores. The porous carbonaceous material may be, for example, carbon black such as Ketjen black, acetylene black, Denka black, thermal black, and channel black; graphite, activated carbon, or any combination thereof. The carbonaceous material may be, for example, in a particle form, a sheet form, or a flake form, but is not limited thereto, any material commonly available in the art as a carbonaceous material may also be utilized. An amount of the carbonaceous material included in the Li₂S-lithium salt-carbonaceous material composite may be, for example, from about 1 wt% to 20 wt%, from about 5 wt% to 20 wt%, or from about 10 wt% to 20 wt% based on a total weight of the composite. If (e.g., when) the amount of the carbonaceous material excessively increases, energy density of the dry cathode film and the all-solid secondary battery may decrease. If (e.g., when) the amount of the carbonaceous material excessively decreases, electronic conductivity of the Li₂S-lithium salt-carbonaceous material composite may decrease, resulting an increase in internal resistance of the dry cathode film. As a result, cycle characteristics of the all-solid secondary battery may deteriorate.

The lithium salt and the carbonaceous material may have a Mohs hardness greater than that of Li₂S, respectively. Li₂S may have a Mohs hardness of, for example, 0.6 or less. The Mohs hardness of the lithium salt may be 0.7 or more, 0.8 or more, 0.9 or more, 1.0 or more, 1.5 or more, or 2.0 or more. If (e.g., when) the Mohs hardness of the lithium salt is within the ranges described above, Li₂S may be pulverized more easily during a milling process and a solid solution of Li₂S and the lithium salt may be formed more easily. The Mohs hardness of Lil may be, for example, 2.0. The carbonaceous material may have a Mohs hardness of 0.7 or more, 0.8 or more, 0.9 or more, 1.0 or more, 1.2 or more, or 1.5 or more. If (e.g,, when) the Mohs hardness of the carbonaceous material is within the ranges described above, Li₂S may be pulverized more easily during a milling process and the Li₂S-lithium salt-carbonaceous material composite may be formed more easily. The carbon nanofiber (CNF) may have a Mohs hardness of, for example, 1.5.

The carbonaceous material may include, for example, a fibrous carbonaceous material. Electronic conductivity of the Li₂S-lithium salt-carbonaceous material composite may further be improved, because the Li₂S-lithium salt-carbonaceous material composite includes the fibrous carbonaceous material. Electronic conduction from the surface of the Li₂S-lithium salt-carbonaceous material composite to the inside may be performed more easily, because the Li₂S-lithium salt-carbonaceous material composite includes the fibrous carbonaceous material. A dry cathode film including the Li₂S-lithium salt-carbonaceous material composite may have reduced internal resistance, and an all-solid secondary battery including the dry cathode film may have further improved cycle characteristics.

The fibrous carbonaceous material may have an aspect ratio of, for example, 2 or more, 3 or more, 4 or more, 5 or more, 10 or more, or 20 or more. The fibrous carbonaceous material may have an aspect ratio of, for example, about 2 to about 30, about 3 to about 30, about 4 to about 30, about 5 to about 30, about 10 to about 30, or about 20 to about 30. The fibrous carbonaceous material may have an aspect ratio of, for example, about 2 to about 30, about 2 to about 20, about 2 to about 10, about 2 to about 8, about 2 to about 5, or about 2 to about 4. If (e.g., when) the aspect ratio of the fibrous carbonaceous material is within the ranges above, overall electronic conductivity of the Li₂S-lithium salt-carbonaceous material composite may be improved, and local non-uniformity of electronic conductivity may further be reduced in the Li₂S-lithium salt-carbonaceous material composite.

The fibrous carbonaceous material may include, for example, a carbon nanostructure. The carbon nanostructure may include or be, for example, carbon nanofiber (CNF), carbon nanotube (CNT), carbon nanobelt, carbon nanorod, or any combination thereof.

The carbon nanostructure may be a primary carbon nanostructure (e.g., a primary particle) formed of a single carbon nanostructure and a secondary carbon nanostructure (e.g., a secondary particle) formed of a plurality of carbon nanostructures aggregated with each other.

The primary carbon nanostructure may have a diameter (e.g., an average diameter or major axis) of, for example, about 1 nm to about 200 nm, about 1 nm to about 150 nm, about 1 nm to about 100 nm, about 1 nm to about 50 nm, about 1 nm to about 30 nm, or about 1 nm to about 20 nm. The primary carbon nanostructure may have a length (e.g., an average length) of, for example, about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and the length of the primary carbon nanostructure may be measured from images obtained by utilizing a scanning electron microscope (SEM) or a transmission electron microscope (TEM). In some embodiments, the diameter and/or length of the primary carbon nanostructure may be measured by a laser diffraction method.

The secondary carbon nanostructure is a structure formed of the primary carbon nanostructures aggregated with each other in a totally or partially bundle or rope form. The secondary carbon nanostructure may include, for example, a bundle-type or kind carbon nanostructure, a rope-type or kind carbon nanostructure, or any combination thereof. The secondary carbon nanostructure may have a diameter (e.g., an average diameter or major axis) of, for example, about 2 nm to about 200 nm, about 3 nm to about 150 nm, about 5 nm to about 100 nm, about 5 nm to about 50 nm, about 5 nm to about 30 nm, or about 5 nm to about 20 nm. The secondary carbon nanostructure may have a length (e.g., an average length) of, for example, about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm. The diameter and length of the secondary carbon nanostructure may be measured from images obtained by utilizing an SEM or an optical microscope. In some embodiments, the diameter and/or length of the secondary carbon nanostructure may be measured by a laser diffraction method. The secondary carbon nanostructure may be dispersed in a solvent, and/or the like, to be converted into the primary carbon nanostructures and then utilized for preparation of the Li₂S-lithium salt-carbonaceous material composite.

A particle size (e.g., an average diameter or major axis) of the dry cathode active material, i.e., a particle size of the Li₂S-lithium salt-carbonaceous material composite, may be, for example, 10 µm or less, 8 µm or less, 5 µm or less, 4 µm or less, 2 µm or less, 1.5 µm or less, or 1 µm or less. The particle size of the composite may be, for example, from about 1 µm to about 10 µm, from about 2 µm to about 10 µm, from about 2 µm to 8 µm, or from about 3 µm to about 8 µm. The particle size of the Li₂S-lithium salt-carbonaceous material composite may be, for example, from about 0.1 µm to about 10 µm, from about 0.1 µm to about 8 µm, from about 0.1 µm to about 5 µm, from about 0.1 µm to about 4 µm, from about 0.1 µm to about 2 µm, from about 0.1 µm to about 1.5 µm, or from about 0.1 µm to about 1 µm. If (e.g., when) the particle size of the Li₂S-lithium salt-carbonaceous material composite is within the ranges described above, a volume change may be inhibited during charging and discharging and deterioration of the dry cathode active material may be inhibited during charging and discharging. If (e.g., when) the particle size of the Li₂S-lithium salt-carbonaceous material composite excessively increases, a volume change of the Li₂S-lithium salt-carbonaceous material composite may increase during charging and discharging, resulting in promoting deterioration of the dry cathode active material. As a result, cycle characteristics of an all-solid secondary battery including the dry cathode active material may deteriorate. Therefore, cycle characteristics, e.g., lifespan characteristics, of an all-solid secondary battery including the dry cathode active material of the present disclosure may be improved. The particle size of the Li₂S-lithium salt-carbonaceous material composite may be measured by utilizing a laser diffraction method or a scanning electron microscope (SEM). The particle diameter of the Li₂S-lithium salt-carbonaceous material composite may be an arithmetic average of particle diameters of a plurality of particles measured utilizing software from a scanning electron microscope image.

A particle size (e.g., an average diameter or major axis) of Li₂S included in the composite, i.e., the particle size of Li₂S included in the composite, may be, for example, 2 µm or less, 1.5 µm or less, or 1 µm or less. The particle size of Li₂S may be, for example, from about 0.1 µm to about 2 µm, from about 0.1 µm to about 1.5 µm, or from about 0.1 µm to about 1 µm. If (e.g., when) the particle size of Li₂S is within the ranges described above, a volume change may be inhibited during charging and discharging, and thus deterioration of the dry cathode active material including the composite may be inhibited during charging and discharging. If (e.g., when) the particle size of Li₂S excessively increases, a volume change of the composite may increase during charging and discharging, resulting in promoting deterioration of the dry cathode active material including the composite. As a result, cycle characteristics of a secondary battery including the dry cathode active material may deteriorate.

The Li₂S-lithium salt-carbonaceous material composite may include, for example, about 10 parts by weight to about 80 parts by weight of Li₂S, about 1 part by weight to about 40 parts by weight of the lithium salt, and about 1 part by weight to about 20 parts by weight of the carbonaceous material based on 100 parts by weight of the composite. The amount of Li₂S included in the Li₂S-lithium salt-carbonaceous material composite may be, for example, from about 10 parts by weight to about 80 parts by weight, from about 20 parts by weight to about 70 parts by weight, from about 30 parts by weight to about 60 parts by weight, or from about 40 parts by weight to about 60 parts by weight based on 100 parts by weight of the composite. The amount of the lithium salt included in the Li₂S-lithium salt-carbonaceous material composite may be, for example, from about 10 parts by weight to about 40 parts by weight, from about 15 parts by weight to about 40 parts by weight, from about 20 parts by weight to about 40 parts by weight, or from about 25 parts by weight to about 35 parts by weight based on 100 parts by weight of the composite. The amount of the carbonaceous material included in the Li₂S-lithium salt-carbonaceous material composite may be, for example, from about 1 part by weight to about 20 parts by weight, from about 5 parts by weight to about 20 parts by weight, or from about 5 parts by weight to about 15 parts by weight based on 100 parts by weight of the composite. If (e.g., when) the Li₂S-lithium salt-carbonaceous material composite includes the composition of Li₂S, the lithium salt, and the carbonaceous material, the dry cathode film including the Li₂S-lithium salt-carbonaceous material composite may have excellent or suitable ionic conductivity and/or electronic conductivity.

Ionic conductivity of the Li₂S-lithium salt-carbonaceous material composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at 25 °C. Ionic conductivity may be measured by, for example, electrochemical impedance spectroscopy, DC polarization method, and/or the like. If (e.g., when) the ionic conductivity of the Li₂S-lithium salt-carbonaceous material composite is within the ranges described above, internal resistance of a dry cathode film including the Li₂S-lithium salt-carbonaceous material composite may further be reduced. Cycle characteristics of an all-solid secondary battery including the dry cathode film may be improved.

Electronic conductivity of the Li₂S-lithium salt-carbonaceous material composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1 ×10⁻⁴ S/cm or more at 25 °C. Electronic conductivity may be measured by, for example, electrochemical impedance spectroscopy, DC polarization method, and/or the like. If (e.g., when) the electronic conductivity of the Li₂S-lithium salt-carbonaceous material composite is within the ranges described above, internal resistance of a dry cathode film including the Li₂S-lithium salt-carbonaceous material composite may further be reduced. Cycle characteristics of an all-solid secondary battery including the dry cathode film may be improved.

An amount of the Li₂S-lithium salt-carbonaceous material composite may be, for example, from about 50 wt% to about 95 wt%, from about 50 wt% to about 80 wt%, from about 55 wt% to about 80 wt%, from about 60 wt% to about 80 wt%, from about 65 wt% to about 80 wt%, or from about 70 wt% to about 80 wt% based on a total weight of the dry cathode film. If (e.g., when) the amount of the Li₂S-lithium salt-carbonaceous material composite is too high, a volume change of the dry cathode may excessively increase during discharging and thus cycle characteristics of the all-solid secondary battery may deteriorate. If (e.g., when) the amount of the Li₂S-lithium salt-carbonaceous material composite is too low, energy density of the all-solid secondary battery may decrease.

### Dry Cathode Film: Sulfide-based Solid Electrolyte

The dry cathode film includes a dry sulfide-based solid electrolyte. The sulfide-based solid electrolyte may include, for example, at least one selected from among Li₂S-P₂S₅, Li₂S-P₂S₅-LiX, wherein X is a halogen atom, Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ, wherein m and n are positive numbers and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be prepared by treating a starting material, such as Li₂S and/or P₂S₅, by melt quenching or mechanical milling. Heat treatment may be performed after such treatment. The sulfide-based solid electrolyte may be in an amorphous or crystalline form or in a mixed form thereof. The sulfide-based solid electrolyte may include, for example, at least sulfur (S), phosphorus (P), and lithium (Li) as components. The sulfide-based solid electrolyte may include, for example, Li₂S-P₂S₅. If (e.g., when) a material including Li₂S-P₂S₅ is utilized as the sulfide-based solid electrolyte material, a mixing molar ratio of Li₂S to P₂S₅ may be, for example, from about 20:80 to about 90:10, from about 25:75 to about 90:10, from about 30:70 to about 70:30, or from about 40:60 to about 60:40.

The sulfide-based solid electrolyte may include, for example, an argyrodite type or kind solid electrolyte represented by Formula 1:

**Formula 1** **Li⁺₁₂₋ₙ₋ₓAⁿ⁺X²⁻₆₋ₓY⁻ₓ**

In Formula 1, A is P, As, Ge, Ga, Sb, Si, Sn, Al, In, Ti, V, Nb, or Ta, X is S, Se, or Te, and Y is Cl, Br, I, F, CN, OCN, SCN, or N₃, wherein 1≤n≤5 and 0≤x≤2. The sulfide-based solid electrolyte may be an argyrodite-type or kind compound (e.g., argyrodite compound) including, for example, at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be an argyrodite-type or kind compound including, for example, at least one selected from among Li₆PS₅Cl, Li₆PS₅Br, and Li₆PS₅I.

The argyrodite-type or kind solid electrolyte may have a density of 1.5 g/cc to 2.0 g/cc. Internal resistance of the all-solid secondary battery may be reduced and penetration of the solid separator may be effectively inhibited, because the argyrodite-type or kind solid electrolyte has a density of 1.5 g/cc or more.

The sulfide-based solid electrolyte included in the dry cathode film may be identical to or different from a sulfide-based solid electrolyte included in the electrolyte layer.

The sulfide-based solid electrolyte included in the dry cathode film may have a smaller average particle diameter D50 than that of the sulfide-based solid electrolyte included in the electrolyte layer. For example, the average particle diameter D50 of the sulfide-based solid electrolyte included in the dry cathode film may be 90% or less, 80% or less, 70% or less, 60% or less, 50% or less, 40 % or less, 30 % or less, or 20 % or less of the average particle diameter D50 of the sulfide-based solid electrolyte included in the electrolyte layer 30. The average particle diameter D50 may be, for example, a median particle diameter D50. The median particle diameter D50 may be a particle diameter corresponding to a 50% cumulative volume calculated from the smallest particle in a particle size distribution measured, for example, by a laser diffraction method.

An amount of the sulfide-based solid electrolyte included in the dry cathode film may be from about 5 wt% to about 45 wt%, from about 15 wt% to about 40 wt%, from about 20 wt% to about 40 wt%, or from about 25 wt% to about 40 wt%, based on a total weight (100 wt%) of the dry cathode film. If (e.g., when) the dry cathode film includes the sulfide-based solid electrolyte in an amount within the ranges described above, the dry cathode film may provide reduced internal resistance and improved ionic conductivity. If (e.g., when) the amount of the sulfide-based solid electrolyte is too low, internal resistance of the dry cathode film may increase, resulting in deterioration of cycle characteristics of the all-solid secondary battery. If (e.g., when) the amount of the sulfide-based solid electrolyte is too high, energy density of the all-solid secondary battery may decrease.

### Dry Cathode Film: Dry Binder

The dry cathode film may include a dry binder. The dry binder may be, for example, a binder that is not impregnated with, dissolved in, or dispersed in a processing solvent during a process of manufacturing the dry cathode film. The dry binder may be, for example, a binder that does not include a processing solvent or is not in contact with the processing solvent during a process of manufacturing the dry cathode film. The dry binder may be, for example, a fibrillized binder or a fibrous binder. The fibrillized binder or fibrous binder may serve as a porous matrix that supports and binds the dry cathode active material and other components included in the dry cathode film. The fibrillized binder or fibrous binder bind to a plurality of dry cathode active material in a state of being discontinuously located on the surface of the dry cathode active material without aggregating each other, and thus an increase in internal resistance of the dry cathode film may be effectively inhibited by the dry binder. It may be confirmed that the fibrillized binder or fibrous binder has a fibrous form based on an SEM image of a cross-section of a dry cathode. The fibrillized binder or fibrous binder may have an aspect ratio of, for example, 10 or more, 20 or more, 50 or more, or 100 or more.

Examples of the dry binder may include polytetrafluoroethylene (PTFE), a polyvinylidene fluoride-hexafluoropropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, and/or one or more copolymers thereof, but are not limited thereto, and any binders suitably utilized in the manufacture of dry electrodes may also be utilized. For example, the dry binder may include a fluorine-based binder. The fluorine-based binder may be, for example, polytetrafluoroethylene (PTFE), a polyvinylidene fluoride-hexafluoropropylene (PVDF-HFP) copolymer, or polyvinylidene fluoride (PVDF).

The dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. The dry binder may have a glass transition temperature (T_{g}) of, for example, about -30 °C to about 150 °C, about -30 °C to about 100 °C, about -30 °C to about 50 °C, about -30 °C to about 15 °C, about -30 °C to about -10 °C, or about -30 °C to about -20 °C. The glass transition temperature of polytetrafluoroethylene (PTFE) may be, for example, from 120 °C to about 130 °C. If (e.g., when) the dry binder has the glass transition temperature within the ranges described above, the fibrillized binder or fibrous binder may be more easily obtained during the process of manufacturing the dry electrode. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

An amount of the dry binder may be, for example, from about 0.1 wt% to about 5 wt%, from about 0.5 wt% to about 5 wt%, from about 1 wt% to about 5 wt%, or from about 1 wt% to about 3 wt%, based on a total weight of the dry cathode film. If (e.g., when) the amount of the dry binder included in the dry cathode film is within the ranges above, binding strength of the dry cathode film may be improved, and high energy density of the dry cathode film may be maintained.

### Dry Cathode Film: Conductive Material

The dry cathode film may further include, for example, a conductive material. The conductive material may be, for example, a dry conductive material. The dry conductive material may be, for example, a conductive material that is not impregnated with, dissolved in, or dispersed in a processing solvent during a process of manufacturing the dry cathode film. The dry conductive material may be, for example, a conductive material that does not include a processing solvent or is not in contact with the processing solvent during a process of manufacturing the dry cathode film. The dry conductive material may include, for example, a carbonaceous conductive material. The carbonaceous conductive material may include, for example, a fibrous carbonaceous material having an aspect ratio of 10 or more, a particulate carbonaceous material having an aspect ratio less than 10, or a combination thereof. The aspect ratio of the fibrous carbonaceous material, e.g., a ratio of diameter and length of the fibrous carbonaceous material may be determined from SEM images.

The fibrous carbonaceous material having an aspect ratio of 10 or more may be, for example, carbon fibers, carbon nanotubes, or carbon nanobelts, but are not limited thereto, and any materials available as the carbonaceous conductive material in the art may also be utilized. The fibrous carbonaceous conductive material may be distinguished from the carbonaceous material constituting the dry cathode active material in terms of being simply mixed with the dry cathode active material.

Examples of the particulate carbonaceous material having an aspect ratio less than 10 may include carbon black, acetylene black, Ketjen black, natural graphite, and artificial graphite, but are not limited thereto, and any carbonaceous conductive materials commonly available in the art may also be utilized. The aspect ratio of the particulate carbonaceous material may be, for example, from about 1 to about 7, from about 1 to about 5, from about 1 to about 3, or from about 1 to about 2.

An amount of the dry conductive material included in the dry cathode film may be, for example, from about 0.1 wt% to about 5 wt%, from about 0.5 wt% to about 5 wt%, or from about 1 wt% to about 5 wt%, based on a total weight of the dry cathode film. If (e.g., when) the amount of the dry conductive material included in the dry cathode film is within the ranges described above, the dry cathode film may have further improved conductivity and an all-solid secondary battery including the dry cathode film may have further improved cycle characteristics. The dry conductive material may not be provided.

### Dry Cathode Film: Other Additives

The dry cathode film may further include, for example, an additive such as a filler, a coating agent, a dispersant, and an ion-conductive adjuvant in addition to the cathode active material, the solid electrolyte, the binder, and the conductive material.

The filler, the coating agent, the dispersant, and the ion-conductive adjuvant included in the dry cathode film may be any suitable materials commonly utilized in cathodes of all-solid secondary batteries.

### Dry Cathode Film: Physical Properties

The dry cathode film may be, for example, a self-standing film. For example, the dry cathode film may have a film shape without utilizing a support. Thus, the dry cathode film may be disposed on a cathode current collector after being prepared as a separate self-standing film. The dry cathode film prepared by a dry method does not include an intentionally added processing solvent. For example, the dry electrode film does not include a residual processing solvent. Although a trace amount of an unintended solvent may remain in the dry cathode film, the solvent is not the processing solvent intentionally added thereto. Therefore, the dry cathode film may be distinguished from a wet cathode film that is prepared by mixing components with a processing solvent, drying the mixture, and removing all of a part of the processing solvent.

The dry cathode film may have a thickness of, for example, about 50 µm to about 500 µm, about 50 µm to about 400 µm, about 50 µm to about 300 µm, or about 50 µm to about 250 µm. If (e.g., when) the dry cathode film is too thin, the number of current collectors may increase, and thus energy density per unit volume of the all-solid secondary battery may decrease. If (e.g., when) the dry cathode film is too thick, internal resistance of the dry cathode may increase, and thus cycle characteristics of the all-solid secondary battery may deteriorate.

The dry cathode film may have a tensile strength of, for example, 500 kPa or more, 700 kPa or more, or 900 kPa or more at 25 °C. The dry cathode film may have a tensile strength of about 500 kPa to about 5000 kPa, about 700 kPa to about 5000 kPa, about 700 kPa to about 3000 kPa, about 700 kPa to about 2000 kPa, or about 900 kPa to about 2000 kPa at 25 °C. If (e.g., when) the tensile strength of the dry cathode film is within the ranges described above, structural stability of the dry cathode film may be improved. Therefore, reversibility of electrode reaction may be improved because a stable three-dimensional conductive network of the dry cathode film is maintained during a charging and discharging process. If (e.g., when) the dry cathode film has such a high tensile strength, mechanical strength of the dry cathode film may be improved. Local deterioration of the dry cathode including the dry cathode film and the all-solid secondary battery including the same caused by a volume change during charging and discharging may be inhibited because the dry cathode film may have improved mechanical strength. As a result, cycle characteristics of the all-solid secondary battery may be improved. If (e.g., when) the tensile strength of the dry cathode film is too low, defects such as cracks and breaks may occur during a process of manufacturing the all-solid secondary battery or a charging and discharging process thereof, resulting in a decrease in a yield of the all-solid secondary battery. Tensile strength (tensile strength at break) of the dry cathode film may be measured, for example, according to the ASTM D412 method.

The dry cathode film may have a surface resistivity of, for example, 70 Ω/sq or less, 60 Ω/sq or less, 50 Ω/sq or less, 40 Ω/sq or less, or 35 Ω/sq or less at 25 °C. The surface resistivity of the dry cathode film may be, for example, from about 0.1 Ω/sq to about 70 Ω/sq, from about 0.5 Ω/sq to about 60 Ω/sq, from 1 Ω/sq to about 50 Ω/sq, from about 1 Ω/sq to about 40 Ω/sq, or from about 1 Ω/sq to about 35 Ω/sq at 25 °C and 1 atm. Surface resistance, interfacial resistance, and/or internal resistance of the dry cathode film may be reduced because the dry cathode film has such a reduced surface resistivity. Therefore, cycle characteristics of an all-solid secondary battery including the dry cathode film may further be improved. The surface resistivity of the dry cathode film may be measured, for example, according to the ASTM D257 or IEC 62631-3-1 method.

### Dry Cathode

### Dry Cathode: Cathode Active Material Layer

A dry cathode according to embodiments may include: a cathode current collector; and a cathode active material layer disposed on at least one side of the cathode current collector. The cathode active material layer may include the above-described dry cathode film. The dry cathode may have further reduced internal resistance by including the above-described dry cathode film. Therefore, cycle characteristics of a secondary battery including the dry cathode may further be improved.

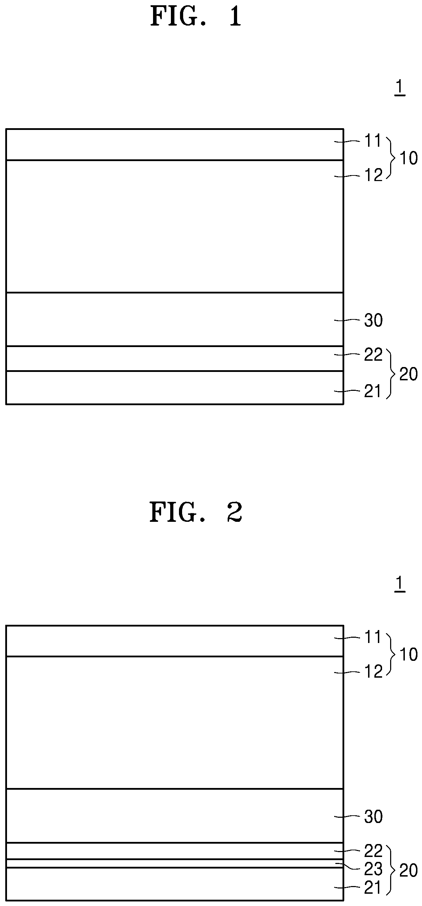

Referring to FIGS. 1 to 7, a dry cathode 10 may include a dry current collector 11, and a cathode active material layer 12 disposed on at least one side of the cathode current collector 11. The cathode active material layer 12 may include the above-described dry cathode film.

### Dry Cathode: Cathode Current Collector

The cathode current collector 11 may be, for example, in the form of a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

The cathode current collector 11 may include, for example, a base film and a metal layer disposed on at least one side of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The base film may be, for example, an insulator. The base film may soften or liquefy in the event of a short circuit to stop the operation of a battery, because the base film includes an insulating thermoplastic polymer, and thus a rapid increase in currents may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer, acting as an electrochemical fuse, may be cut in the event of an overcurrent, to prevent or reduce a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector 11 decreases, so that stability of the lithium battery may be improved if (e.g., when) a short circuit occurs. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, Al foil, copper foil, and stainless steel (SUS) foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. The base film may have a thickness of, for example, about 1 µm to about 50 µm, about 1.5 µm to about 50 µm, about 1.5 µm to about 40 µm, or about 1 µm to about 30 µm. If (e.g., when) the thickness of the base film is within the above-described ranges, the weight of the electrode assembly may be reduced more effectively. A melting point of the base film may be, for example, from about 100 °C to about 300 °C, from about 100 °C to about 250 °C, or from about 100 °C to about 200 °C. If (e.g., when) the base film has a melting point within the above-described ranges, the base film may melt during a process of welding the lead tab to be easily bound to the lead tab. To improve adhesion between the base film and the metal layer, surface treatment such as corona treatment may be performed on the base film. A thickness of the metal layer may be, for example, from about 0.01 µm to about 3 µm, from about 0.1 µm to about 3 µm, from about 0.1 µm to about 2 µm, or from about 0.1 µm to about 1 µm. If (e.g., when) the thickness of the metal layer is within the above-described ranges, stability of the electrode assembly may be obtained while maintaining conductivity thereof. A thickness of the metal chip may be, for example, from about 2 µm to about 10 µm, from about 2 µm to about 7 µm, or from about 4 µm to about 6 µm. If (e.g., when) the thickness of the metal chip is within the above-described ranges, the metal layer may be connected to the lead tab more easily. If (e.g., when) the cathode current collector 11 has the above-described structure, the weight of the cathode may be reduced, so that energy density of the cathode and the lithium battery may be increased.

### Dry Cathode:lnterlayer

The dry cathode may include: a cathode current collector; and may further include an interlayer disposed between the cathode current collector and the dry cathode film (i.e,, dry cathode active material layer). The interlayer may not be provided.

The interlayer may be disposed, for example, on at least one side of the cathode current collector. By disposing the interlayer on at least one side of the cathode current collector, binding strength between the cathode current collector and the dry cathode film may further be improved.

A thickness of the interlayer may be, for example, from about 0.01 % to about 30 %, from about 0.1 % to about 30 %, from about 0.5 % to about 30 %, from about 1 % to about 25 %, from about 1 % to about 20 %, from about 1 % to about 15 %, from about 1 % to about 10 %, from about 1 % to about 5 %, or from about 1 % to about 3 % of a thickness of the cathode current collector. The thickness of the interlayer may be, for example, from about 10 nm to about 5 µm, from about 50 nm to about 5 µm, from about 200 nm to about 4 µm, from about 500 nm to about 3 µm, from about 500 nm to about 2 µm, from about 500 nm to about 1.5 µm, or from about 700 nm to about 1.3 µm. If (e.g., when) the interlayer has a thickness within the above-described ranges, binding strength between the cathode current collector and the dry cathode film may further be increased and an increase in interfacial resistance may be inhibited.

The interlayer may include, for example, a carbonaceous conductive material. The carbonaceous conductive material included in the interlayer may be selected from carbonaceous conductive materials utilized in the dry electrode film. The interlayer may include the same carbonaceous conductive material as that utilized in the dry electrode film. The interlayer may be, for example, a conductive layer, because the interlayer includes the carbonaceous conductive material.

### Dry Cathode: First Inactive Member

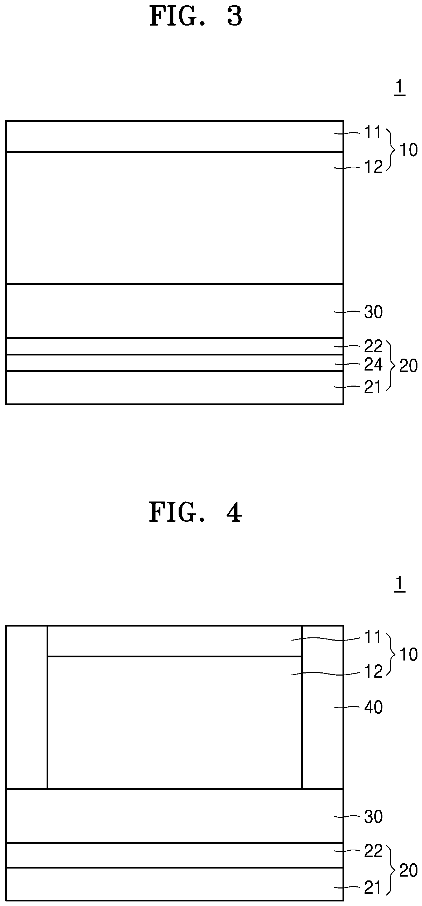

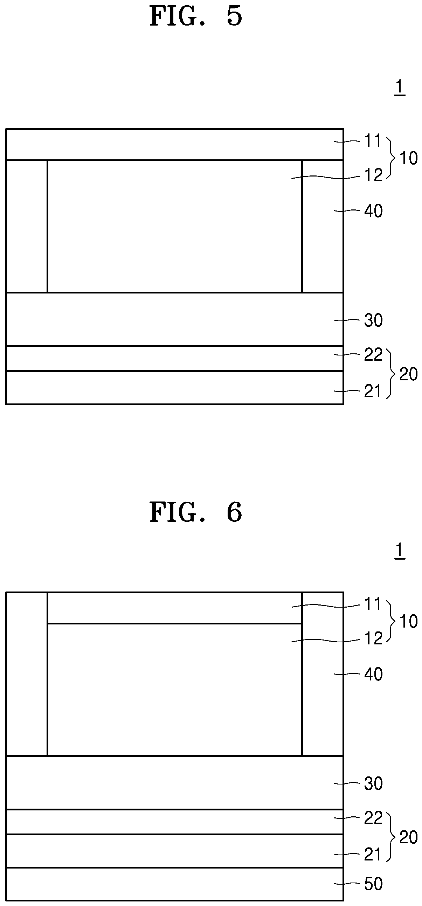

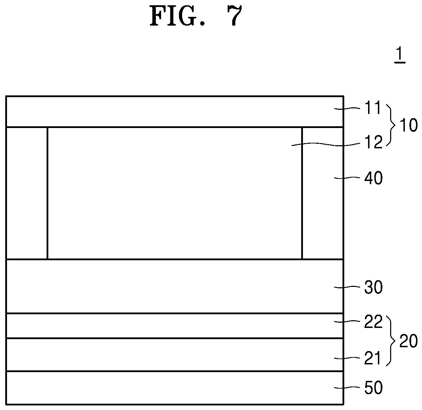

Referring to FIGS. 4 to 7, a cathode 10 may include a cathode current collector 11 and a cathode active material layer 12 disposed on side of the cathode current collector 11. A first inactive member 40 may be disposed on one side surface of the cathode 10. Referring to FIGS. 4 and 6, the first inactive member 40 may be disposed on at least one side of each of the cathode active material layer 12 and the cathode current collector 11. Referring to FIGS. 5 and 7, the first inactive member 40 may be located on one side surface of the cathode active material layer 12 and disposed between the electrolyte layer 30 and the cathode current collector 30 facing the electrolyte layer 30. The first inactive member 40 may be not disposed on the side surfaces of the cathode current collector 11. The electrolyte layer 30 may be, for example, a solid electrolyte layer.

If (e.g., when) the cathode 10 includes the first inactive member 40, occurrence of cracks may be inhibited in the electrolyte layer 30 during manufacturing and/or charging and discharging of the all-solid secondary battery 1, so that cycle characteristics of the all-solid secondary battery 1 may be improved. In an all-solid secondary battery 1 not including the first inactive member 40, a substantially non-uniform pressure may be applied to the electrolyte layer 30 in contact with the cathode 10 during manufacturing and/or charging and discharging of the all-solid secondary battery 1 to cause occurrence of cracks in the electrolyte layer 30, and thus lithium metal grows thereby to increase the possibility of a short circuit.

In the all-solid secondary battery 1, a thickness of the first inactive member 40 may be greater than a thickness of the cathode active material layer 12 or the same as the thickness of the cathode active material layer 12. For example, in the all-solid secondary battery 1, the thickness of the first inactive member 40 may be substantially identical to a thickness of the cathode 10. If (e.g., when) the thickness of the first inactive member 40 is identical to that of the cathode 10, a substantially uniform pressure may be applied between the cathode 10 and the electrolyte layer 30 and the cathode 10 may be in sufficiently close contact with the electrolyte layer 30, so that interfacial resistance between the cathode 10 and the electrolyte layer 30 may be reduced. The electrolyte layer 30 may be sufficiently sintered during a pressing/manufacturing process of the all-solid secondary battery 1, and thus internal resistance of the electrolyte layer 30 and the all-solid secondary battery 1 including the same may be reduced.

The first inactive member 40 may be in contact with the solid electrolyte layer 30 in a state of surrounding side surfaces of the cathode 10. If (e.g., when) the first inactive member 40 is in contact with the electrolyte layer 30 in a state of surrounding side surfaces of the cathode 10, cracks, which are caused by a pressure difference in the electrolyte layer 30 not in contact with the cathode 10 during a pressing process, may be effectively inhibited. The first inactive member 40 around (e.g., surrounding) the side surfaces of the cathode 10 may be separated from an anode 20, for example, the first anode active material layer 22. The first inactive member 40 may be in contact with the electrolyte layer 30 in a state of surrounding side surfaces of the cathode 10 and may be separated from the anode 20. Therefore, the possibility of a short circuit caused by physical contact between the cathode 10 and a first anode active material layer 22 or the possibility of a short circuit caused by overcharging of lithium may be inhibited. For example, if (e.g., when) the first inactive member 40 is disposed on one side surface of the cathode active material layer 12 as well as one side surface of the cathode current collector 11, the possibility of a short circuit caused by contact between the cathode current collector 11 and the anode 20 may be inhibited more effectively.

Referring to FIGS. 4 to 7, the first inactive member 40 may extend from one side surface of the cathode 10 to an end portion of the electrolyte layer 30. By extending the first inactive member 40 to the end portion of the electrolyte layer 30, cracks occurring in the end portion of the electrolyte layer 30 may be inhibited. The end portion of the electrolyte layer 30 may be the outermost portion in contact with a side surface of the electrolyte layer 30. The first inactive member 40 may extend to the outermost portion in contact with the side surface of the solid electrolyte layer 30. The first inactive member 40 may be separated from the anode 20, for example, the first anode active material layer 22. The first inactive member 40 may extend to the end portion of the electrolyte layer 30 but not in contact with the anode 20. The first inactive member 40 may fill a space between one side surface of the cathode 10 and the end portion of the electrolyte layer 30.

Referring to FIGS. 4 to 7, a width of the first inactive member 40 extending from one side surface of the cathode 10 to the end portion of the electrolyte layer 30 may be, for example, about 1 % to about 30 %, about 1 % to about 25 %, about 1 % to about 20 %, about 1 % to about 15 %, about 1 % to about 10 %, or about 1 % to about 5 % of a width the cathode 10 between one side surface and the other side surface facing the one side surface. If (e.g., when) the width of the first inactive member 40 is too large, energy density of the all-solid secondary battery 1 may decrease. If (e.g., when) the width of the first inactive member 40 is too small, the effects of the first inactive member 40 may be negligible.

An area of the cathode 10 may be smaller than an area of the electrolyte layer 30 in contact with the cathode 10. The first inactive member 40 arranged to surround side surfaces of the cathode 10 may compensate for a difference in area between the cathode 10 and the electrolyte layer 30. Cracks of the electrolyte layer 30 caused by a pressure difference during a pressing process may be effectively inhibited, because the area of the first inactive member 40 compensates for the difference between the area of the cathode 10 and the area of the electrolyte layer 30. For example, a sum of the area of the cathode 10 and the area of the first inactive member 40 may be identical to the area of the electrolyte layer 30. The electrolyte layer 30 may be, for example, a solid electrolyte layer.

The area of the cathode 10 may be, for example, less than 100 %, 99 % or less, 98 % or less, 97 % or less, 96 % or less, or 95 % or less of the area of the electrolyte layer 30. The area of the cathode 10 may be, for example, from about 50 % but less than 100 %, from about 50 % to about 99 %, from about 55 % to about 98 %, from about 60 % to about 97 %, from about 70 % to about 96 %, from about 80 % to about 95 %, or from about 85 % to about 95 % of the area of the electrolyte layer 30.

If (e.g., when) the area of the cathode 10 is identical to or greater than the area of the electrolyte layer 30, the possibility of a short circuit caused by physical contact between the cathode 10 and the first anode active material layer 22 or a short circuit caused by overcharging of lithium may increase. The area of the cathode 10 may be, for example, identical to the area of the cathode active material layer 12. The area of the cathode 10 may be, for example, identical to the area of the cathode current collector 11.

The area of the first inactive member 40 may be, for example, 50 % or less, 40 % or less, 30 % or less, 20 % or less, or 10 % or less of the area of the cathode 10. The area of the first inactive member 40 may be, for example, from about 1 % to about 50 %, from about 5 % to about 40 %, from about 5 % to about 30 %, from about 5 % to about 20 %, or from about 5 % to about 15 % of the area of the cathode 10.

An area S1 of the cathode 10 may be smaller than an area S4 of an anode current collector 21. The area S1 of the cathode 10 may be, for example, less than 100 %, 99 % or less, 98 % or less, 97 % or less, 96 % or less, or 95 % or less of the area S4 of the anode current collector 21. The area S1 of the cathode 10 may be, for example, from about 50 % but less than 100 %, from about 50 % to about 99 %, from about 55 % to about 98 %, from about 60 % to about 97 %, from about 70 % to about 96 %, from about 80 % to about 95 %, or from about 85 % to about 95 % of the area S4 of the anode current collector 21. The area S4 of the anode current collector 21 may be, for example, identical to the area of the anode 20. The area S4 of the anode current collector 21 may be, for example, identical to the area of the first anode active material layer 22.

As utilized herein, the "same" area, length, width, thickness, and/or shape may include all cases having "substantially same" area, length, width, thickness, and/or shape except that the area, length, thickness, and/or shape are intentionally modified. The "same" area, length, width, and/or thickness may include, for example, a range of unintended differences less than 3 %, less than 2 %, less than 1 %, less than 0.5 %, or less than 0.1 % in the area, length, width, and/or thickness between subjects to be compared.

A thickness of the first inactive member 40 may be, for example, greater than a thickness of the first anode active material layer 22. The thickness of the first anode active material layer 22 may be, for example, 50 % or less, 40 % or less, 30 % or less, 20 % or less, or 10 % or less of the thickness of the first inactive member 40. The thickness of the first anode active material layer 22 may be from about 1 % to about 50 %, from about 1 % to about 40 %, from about 1 % to about 30 %, from about 1 % to about 20 %, or from about 1 % to about 10 % of the thickness of the first inactive member 40.

The first inactive member 40 may be a gasket. By utilizing the gasket as the first inactive member 40, cracks occurring in the electrolyte layer 30 by a pressure difference during a pressing process may be more effectively inhibited.

The first inactive member 40 may have, for example, a single-layer structure. In some embodiments, although not shown in the drawings, the first inactive member 40 may have a multilayer structure. In the first inactive member 40 having a multilayer structure, each layer may have a different composition. The first inactive member 40 having a multilayer structure may have a two-layer structure, a three-layer structure, a four-layer structure, or a five-layer structure. The first inactive member 40 having a multilayer structure may include, for example, at least one adhesive layer and at least one support layer. The adhesive layer may effectively prevent or reduce separation of the cathode 10 from the electrolyte layer 30 caused by a volume change of the cathode 10 occurring during a charging and discharging process of the all-solid secondary battery 1 and provide binding strength between the support layer and other layers, so as to increase strength of a film of the first inactive member 40. The support layer may provide a supporting force to the first inactive member 40 to prevent or reduce substantially non-uniform application of a pressure to the electrolyte layer 30 during a pressing process or a charging and discharging process and prevent or reduce deformation of the all-solid secondary battery 1.

The first inactive member 40 may be, for example, a flame-retardant inactive member. Thermal runaway and ignition of the all-solid secondary battery 1 may be prevented or reduced, because the flame-retardant inactive member provides flame retardancy. As a result, safety of the all-solid secondary battery 1 may further be improved. The flame-retardant inactive member absorbs moisture remaining in the all-solid secondary battery 1, and thus deterioration of the all-solid secondary battery 1 may be prevented or reduced so as to improve lifespan characteristics of the all-solid secondary battery 1.

The flame-retardant inactive member may include, for example, a matrix and a filler. The matrix may include, for example, a substrate and a reinforcement. The matrix may include, for example, a fibrous substrate and a fibrous reinforcement. By including the substrate, the matrix may have elasticity. Therefore, the matrix effectively may accommodate a volume change during charging and discharging of the all-solid secondary battery 1 and may be arranged in one or more suitable positions. The substrate included in the matrix may include, for example, a first fibrous material. If (e.g., when) the substrate includes the first fibrous material, a volume change of the cathode 10 may effectively be accommodated during charging and discharging of the all-solid secondary battery 1, and deformation of the first inactive member 40 caused by the volume change of the cathode 10 may effectively be inhibited. The first fibrous material may be, for example, a material having an aspect ratio of 5 or more, 20 or more, or 50 or more. The first fibrous material may be, for example, a material having an aspect ratio of about 5 to about 1000, about 20 to about 1000, or about 50 to about 1000. The first fibrous material may be, for example, an insulating material. A short circuit between the cathode 10 and the anode 20 caused by lithium dendrite and/or the like formed during a charging and discharging process of the all-solid secondary battery 1 may be effectively inhibited, because the first fibrous material is an insulating material. The first fibrous material may include, for example, at least one selected from pulp fibers, insulating polymer fibers, and ion-conductive polymer fibers. Strength of the matrix may be increased, because the matrix includes the reinforcement. Therefore, the matrix may prevent or reduce an excessive volume change during charging and discharging of the all-solid secondary battery 1 and prevent or reduce deformation of the all-solid secondary battery. The reinforcement included in the matrix may include, for example, a second fibrous material. Strength of the matrix may be increased more uniformly, because the reinforcement includes the second fibrous material. The second fibrous material may be, for example, a material having an aspect ratio or 3 or more, 5 or more, or 10 or more. The first fibrous material may be, for example, a material having an aspect ratio of about 3 to about 100, about 5 to about 100, or about 10 to about 100. The second fibrous material may be, for example, a flame-retardant material. Ignition caused by thermal runaway during a charging and discharging process of the all-solid secondary battery 1 or due to an external impact may be effectively prevented or reduced, because the second fibrous material is the flame-retardant material. The second fibrous material may be, for example, glass fibers, metal oxide fibers, and ceramic fibers.

The flame-retardant inactive member may include a filler in addition to the matrix. The filler may be located inside the matrix, on the surface of the matrix, or both (e.g., simultaneously) inside and on the surface of the matrix. The filler may be, for example, an inorganic material. The filler included in the flame-retardant inactive member may be, for example, a moisture getter. The filler may absorb moisture, for example, at a temperature below 100°C to remove moisture remaining in the all-solid secondary battery 1, thereby preventing or reducing deterioration of the all-solid secondary battery 1. If (e.g., when) a temperature of the all-solid secondary battery 1 exceeds 150°C by a thermal runaway caused during a charging and discharging process of the all-solid secondary battery 1 or due to an external impact, the filler may release the absorbed moisture, thereby effectively inhibiting ignition of the all-solid secondary battery 1. For example, the filler may be, for example, a flame retardant. The filler may be, for example, a metal hydroxide having moisture absorbency. The metal hydroxide included in the filler may be, for example, Mg(OH)₂, Fe(OH)₃, Sb(OH)₃, Sn(OH)₄, TI(OH)₃, Zr(OH)₄, Al(OH)₃, or any combination thereof. An amount of the filler included in the flame-retardant inactive member may be, for example, from about 10 parts by weight to about 80 parts by weight, from about 20 parts by weight to about 80 parts by weight, from about 30 parts by weight to about 80 parts by weight, from about 40 parts by weight to about 80 parts by weight, from about 50 parts by weight to about 80 parts by weight, from about 60 parts by weight to about 80 parts by weight, or from about 65 parts by weight to about 80 parts by weight based on 100 parts by weight of the flame-retardant inactive member 40.

The flame-retardant inactive member may further include, for example, a binder. The binder may include, for example, a curable polymer or a non-curable polymer. The curable polymer may be a polymer cured by heat and/or pressure. The curable polymer may be, for example, a solid at room temperature. The flame-retardant inactive member includes, for example, a thermo-pressure curable film and/or a cured product thereof. The thermo-pressure curable polymer may be, for example, TSA-66 manufactured by Toray.

The flame-retardant inactive member may further include another material in addition to the above-described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, about 10 % to about 300 %, about 10 % to about 150 %, about 10 % to about 140 %, about 10 % to about 130 %, or about 10 % to about 120 % of the density of the cathode active material included in the cathode active material layer 12.

The first inactive member 40 may be a member not including an electrochemically active material, such as an electrode active material. The electrode active material may be a material that allows intercalation/deintercalation of lithium. The first inactive member 40 may be formed of any material commonly utilized in the art, other than the electrode active material.

### All-solid Secondary Battery

An all-solid secondary battery according to embodiments may include: a cathode; an anode; and an electrolyte layer disposed between the cathode and the anode. The cathode may be the above-described dry cathode. The anode may include an anode current collector and a first anode active material layer disposed on one side of the anode current collector.

Referring to FIGS. 1 to 7, the all-solid secondary battery 1 may include: a cathode 10; an anode 20; and an electrolyte layer 30 disposed between the cathode 10 and the anode 20. The cathode 10 may include a dry cathode. The anode 20 may include an anode current collector 21 and a first anode active material layer 22 disposed on one side of the anode current collector 21.

### Cathode

Refer to the previously-described dry cathode.

### Anode

### Anode: Anode Active Material

Referring to FIGS. 1 to 7, the anode 20 may include a first anode active material layer 22. The first anode active material layer 22 may include, for example, an anode active material and a binder.

The anode active material included in the first anode active material layer 22 may be, for example, a material for anodes allowing formation of an alloy or compound with lithium.

The anode active material included in the first anode active material layer 22 may be, for example, in the form of particles. The anode active material in the form of particles may have an average particle diameter of, for example, 4 µm or less, 3 µm or less, 2 µm or less, 1 µm or less, 500 nm or less, 300 nm or less, or 100 nm or less. The anode active material in the form of particles may have an average particle diameter of, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. If (e.g., when) the average particle diameter of the anode active material is within the ranges described above, reversible absorbing and/or desorbing of lithium may occur more easily during charging and discharging. The average particle diameter of the anode active material may be, for example, a median diameter D50 measured utilizing a laser particle size analyzer.

The anode active material included in the first anode active material layer 22 may include, for example, at least one selected from a carbonaceous anode active material and a metal or metalloid anode active material.

The carbonaceous anode active material may include, for example amorphous carbon, crystalline carbon, porous carbon, or any combination thereof.

The carbonaceous anode active material may be, for example, amorphous carbon. The amorphous carbon may be, for example, carbon black (CB), acetylene black (AB), furnace black (FB), Ketjen black (KB), or graphene, but is not limited thereto, and any carbon classified as amorphous carbon in the art may also be utilized. Amorphous carbon may be carbon that does not have crystallinity or has very low crystallinity and may be distinguished from crystalline carbon or graphite-based carbon.

The carbonaceous anode active material may be, for example, porous carbon. A volume of pores in the porous carbon may be, for example, from about 0.1 cc/g to about 10.0 cc/g, from about 0.5 cc/g to about 5 cc/g, or from about 0.1 cc/g to about 1 cc/g. The porous carbon may have an average pore diameter of, for example, about 1 nm to about 50 nm, about 1 nm to about 30 nm, or about 1 nm to about 10 nm. The porous carbon may have a BET specific surface area of, for example, about 100 m²/g to about 3000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but is not limited thereto, and any suitable metal or metalloid anode active materials that form an alloy or compound with lithium may also be utilized. For example, nickel (Ni) may not be a metal anode active material, because Ni does not form an alloy with lithium.

The first anode active material layer 22 may include one type or kind of the anode active materials or a mixture of a plurality of different anode active materials among these anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of amorphous carbon and gold, and/or the like, in the mixture may be, for example, from about 99:1 to about 1:99, from about 10:1 to about 1:2, from about 5:1 to about 1:1, or from about 4:1 to about 2:1. However, the mixing ratio is not limited thereto but selected in accordance with required characteristics of the all-solid secondary battery 1. Due to the composition of the anode active material, cycle characteristics of the all-solid secondary battery 1 may further be improved.

The anode active material included in the first anode active material layer 22 may include, for example, a mixture of first particles formed of amorphous carbon and second particles formed of a metal or metalloid. The metal or metalloid may include, for example, gold (Au), platinum (Pt), palladium (Pd), silicon (Si), silver (Ag), aluminum (Al), bismuth (Bi), tin (Sn), and zinc (Zn). The metalloid may be, for example, a semiconductor. An amount of the second particles may be from about 1 to about 99 wt%, from about 1 wt% to about 60 wt%, from about 8 wt% to about 60 wt%, from about 10 wt% to about 50 wt%, from about 15 wt% to about 40 wt%, or from about 20 wt% to about 30 wt%, based on a total weight of the mixture. If (e.g., when) the amount of the second particles is within the ranges above, cycle characteristics of the all-solid secondary battery 1 may further be improved.

In some embodiments, the first anode active material layer 22 may include a composite anode active material. The composite anode active material may include, for example, a carbonaceous support and a metallic anode active material supported on the carbonaceous support. If (e.g., when) the composite anode active material has such a structure, localization of the metallic anode active material may be inhibited in the first anode active material layer and substantially uniform distribution may be obtained. As a result, cycle characteristics of the all-solid secondary battery 1 including the first anode active material layer 22 may further be improved.

The metallic anode active material supported on the carbonaceous support may include, for example, a metal, a metal oxide, a composite of a metal and a metal oxide, or any combination thereof. The metal may include, for example, gold (Au), platinum (Pt), palladium (Pd), silicon (Si), silver (Ag), aluminum (Al), bismuth (Bi), tin (Sn), tellurium (Te), and zinc (Zn). The metal oxide may include, for example, a gold (Au) oxide, a platinum (Pt) oxide, a palladium (Pd) oxide, a silicon (Si) oxide, a silver (Ag) oxide, an aluminum (Al) oxide, a bismuth (Bi) oxide, a tin (Sn) oxide, a tellurium (Te) oxide, and a zinc (Zn) oxide. The metal oxide may include, for example, AuₓO_{y} (wherein 0<x≤2 and 0<y≤3), PtₓO_{y} (wherein 0<x≤1 and 0<y≤2), PdₓO_{y} (wherein 0<x≤1 and 0<y≤1), SiₓO_{y} (wherein 0<x≤1 and 0<y≤2), AgₓO_{y} (wherein 0<x≤2 and 0<y≤1), AlₓO_{y} (wherein 0<x≤2 and 0<y≤3), BiₓO_{y} (wherein 0<x≤2 and 0<y≤3), SnₓO_{y} (wherein 0<x≤1 and 0<y≤2), TeₓO_{y} (wherein 0<x≤1 and 0<y≤3), ZnₓO_{y} (wherein 0<x≤1 and 0<y≤1), or any combination thereof. The composite of a metal and a metal oxide may include, for example, a composite of Au and AuₓO_{y} (wherein 0<x≤2 and 0<y≤3), a composite of Pt and PtₓO_{y} (wherein 0<x≤1 and 0<y≤2), a composite of Pd and PdₓO_{y} (wherein 0<x≤1 and 0<y≤1), a composite of Si and SiₓO_{y} (wherein 0<x≤1 and 0<y≤2), a composite of Ag and AgₓO_{y} (wherein 0<x≤2 and 0<y≤1), a composite of Al and AlₓO_{y} (wherein 0<x≤2 and 0<y≤3), a composite of Bi and BiₓO_{y} (wherein 0<x≤2 and 0<y≤3), a composite of Sn and SnₓO_{y} (wherein 0<x≤1 and 0<y≤2), a composite of Te and TeₓO_{y} (wherein 0<x≤1 and 0<y≤3), a composite of Zn and ZnₓO_{y} (wherein 0<x≤1 and 0<y≤1), or any combination thereof.

The carbonaceous support may be, for example, amorphous carbon. The amorphous carbon may be, for example, carbon black (CB), acetylene black (AB), furnace black (FB), Ketjen black (KB), graphene, activated carbon, carbon nanofiber (CNF), or carbon nanotube (CNT), but is not limited thereto, and any carbon classified as amorphous carbon in the art may also be utilized. Amorphous carbon may be carbon that does not have crystallinity or has very low crystallinity and may be distinguished from crystalline carbon or graphite-based carbon. The carbonaceous material may be, for example, a carbonaceous anode active material.

The composite anode active material may be, for example, in the form of particles. The composite anode active material in the form of particles may have a particle diameter of, for example, about 10 nm to about 4 µm, about 10 nm to about 1 µm, about 10 nm to about 500 nm, about 10 nm to about 200 nm, or about 10 nm to about 100 nm. If (e.g., when) the average particle diameter of the composite anode active material is within the ranges described above, reversible absorbing and/or desorbing of lithium may occur more easily during charging and discharging. The metallic anode active material supported on the support may be, for example, in the form of particles. The metallic anode active material may have a particle diameter of, for example, about 1 nm to about 200 nm, about 1 nm to about 150 nm, about 5 nm to about 100 nm, or about 10 nm to about 50 nm. The carbonaceous support may be, for example, in the form of particles. The carbonaceous support may have a particle diameter of, for example, about 10 nm to about 2 µm, about 10 nm to about 1 µm, about 10 nm to about 500 nm, about 10 nm to about 200 nm, or about 10 nm to about 100 nm. If (e.g., when) the carbonaceous support has the particle diameter is within the ranges described above, the carbonaceous support may be more uniformly arranged in the first anode active material layer. The carbonaceous support may be, for example, nanoparticles having a particle diameter of 500 nm or less. The particle diameter of the composite anode active material, the particle diameter of the metallic anode active material, and the particle diameter of the carbonaceous support may be, for example, average particle diameters. The average particle diameter may be, for example, a median diameter D50 measured utilizing a laser particle size analyzer. In some embodiments, the average particle diameter may be determined, for example, automatically utilizing software or manually based on manuals from an electron microscope image.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, or polymethylmethacrylate, but is not limited thereto, and any binders commonly available in the art may also be utilized. The binder may be utilized alone or as a combination of a plurality of different binders.

The first anode active material layer 22 may be stabilized on the anode current collector 21, because the first anode active material layer 22 includes the binder. Cracks may be inhibited in the first anode active material layer 22 during a charging and discharging process, although a volume and/or a relative position of the first anode active material layer 22 changes. For example, if (e.g., when) the first anode active material layer 22 does not include a binder, the first anode active material layer 22 may be easily separated from the anode current collector 21. The first anode active material layer 22 is separated from the anode current collector 21, and thus an exposed region of the anode current collector 21 may be brought into contact with the electrolyte layer 30, thereby increasing the possibility of occurrence of a short circuit. The first anode active material layer 22 may be prepared by, for example, applying a slurry, in which materials constituting the first anode active material layer 22 are dispersed, to the anode current collector 21, and drying the slurry. By adding the binder to the first anode active material layer 22, the anode active material may be stably dispersed in the slurry. For example, if (e.g., when) the slurry is applied to the anode current collector 21 by screen printing, it may be possible to suppress or reduce clogging of a screen (e.g., clogging by agglomerates of the anode active material).

### Anode: Other Additives

The first anode active material layer 22 may further include additives utilized in all-solid secondary batteries 1, such as a filler, a coating agent, a dispersant, and an ion-conductive adjuvant.

### Anode: Solid Electrolyte

The first anode active material layer 22 may further include a solid electrolyte. The solid electrolyte may be selected from the solid electrolytes included in the electrolyte layer 30. The solid electrolyte included in the first anode active material layer 22 may serve as a reaction site where formation of lithium metal is initiated in the first anode active material layer 22, as a space for storing the formed lithium metal, or as a path for delivering lithium ions. The solid electrolyte may not be provided.

In the first anode active material layer 22, for example, the amount of the solid electrolyte may be higher in an area adjacent to the electrolyte layer 30 and may be lower in an area adjacent to the anode current collector 21. In the first anode active material layer 22, the solid electrolyte may have, for example, a concentration gradient such that the concentration decreases from an area adjacent to the electrolyte layer 30 to an area adjacent to the anode current collector 21.

### Anode: First Anode Active Material Layer

A ratio B/A of an initial charging capacity B of the first anode active material layer 22 to an initial charging capacity A of the cathode active material layer may be from about 0.005 to about 0.45. The initial charging capacity of the cathode active material layer 12 may be determined at a maximum charging voltage relative Li/Li⁺ from a 1^{st} open circuit voltage. The initial charging capacity of the first anode active material layer 22 may be determined at 0.01 V relative to Li/Li⁺ from a 2^{nd} open circuit voltage.

The maximum charging voltage may be determined by a type or kind of the cathode active material. The maximum charging voltage may be, for example, 1.5 V, 2.0 V, 2.5 V, 3.0 V, 3.5 V, 4.0 V, 4.2 V, or 4.3 V. For example, a maximum charging voltage of the Li₂S or Li₂S composite may be 2.5 V relative to Li/Li⁺. For example, the maximum charging voltage of the Li₂S or Li₂S composite may be 3.0 V relative to Li/Li⁺. The ratio B/A of the initial charging capacity B of the first anode active material layer 22 to the initial charging capacity A of the cathode active material layer may be, for example, from about 0.01 to about 0.3, from about 0.01 to about 0.2, or from about 0.05 to about 0.1. The initial charging capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, charge specific capacity × mass values for all of the cathode active materials are calculated respectively, and a sum of the values may be regarded as an initial charging capacity of the cathode active material layer 12. The initial charging capacity of the first anode active material layer 22 may be calculated in substantially the same manner. The initial charging capacity of the first anode active material layer 22 may be obtained by multiplying a charge specific capacity (mAh/g) of the anode active material by a mass of the anode active material of the first anode active material layer 22. If (e.g., when) one or more suitable types (kinds) of anode active materials are utilized, charge specific capacity × mass values for all of the anode active materials are calculated respectively, and a sum of the values may be regarded as the initial charging capacity of the first anode active material layer 22. The charge specific capacity of the cathode active material and the anode active material may be measured by utilizing an all-solid half-cell to which lithium metal is utilized as a counter electrode. The initial charging capacities of the cathode active material layer 12 and the first anode active material layer 22 may be directly measured respectively at a constant current density, e.g., 0.1 mA/cm², by utilizing an all-solid half-cell. The measurement may be performed on the cathode with an operating voltage from the 1^{st} open circuit voltage (OCV) to the maximum charging voltage, e.g., 3.0 V (vs. Li/Li⁺). The measurement may be performed on the anode, e.g., lithium metal, with an operating voltage from the 2^{nd} open circuit voltage (OCV) to 0.01 V. For example, an all-solid half-cell including the cathode active material layer may be charged at a constant current of 0.1 mA/cm² from the 1^{st} open circuit voltage to 3.0 V, and the all-solid half-cell including the first anode active material layer may be charged at a constant current of 0.1 mA/cm² from the 2^{nd} open circuit voltage to 0.01 V. A current density during the charging at the constant current may be, for example, 0.2 mA/cm² or 0.5 mA/cm². An all-solid half-cell including the cathode active material layer may be charged, for example, from the 1^{st} open circuit voltage to 2.5 V, 2.0 V, 3.5 V, or 4.0 V. The maximum charging voltage of the cathode active material may be determined by a maximum voltage of a battery satisfying safety conditions according to JISC8712:2015 of the Japanese Standards Association.

If (e.g., when) the first anode active material layer 22 has a too low initial charging capacity, the thickness of the first anode active material layer 22 may become too small, and thus lithium dendrite formed between the first anode active material layer 22 and the anode current collector 21 during repeated charging and discharging processes may break the first anode active material layer 22, making it difficult to improve cycle characteristics of the all-solid secondary battery 1. If (e.g., when) the first anode active material layer 22 has a too high charging capacity, energy density of the all-solid secondary battery 1 decreases, and thus internal resistance of the all-solid secondary battery 1 may be increased by the first anode active material layer 22, making it difficult to improve cycle characteristics of the all-solid secondary battery 1.

A thickness of the first anode active material layer 22 may be, for example, 50 % or less, 40 % or less, 30 % or less, 20 % or less, 10 % or less, or 5 % or less of a thickness of the cathode active material layer 12. The thickness of the first anode active material layer 22 may be, for example, from about 1 % to about 50 %, from about 1 % to about 40 %, from about 1 % to about 30 %, from about 1 % to about 20 %, from about 1 % to about 10%, or from about 1 % to about 5 % of the thickness of the cathode active material layer 12. The thickness of the first anode active material layer 22 may be, for example, from about 1 µm to about 20 µm, from about 2 µm to about 15 µm, or from about 3 µm to about 10 µm. If (e.g., when) the first anode active material layer 22 has a too small thickness, lithium dendrite formed between the first anode active material layer 22 and the anode current collector 21 may break the first anode active material layer 22, making it difficult to improve cycle characteristics of the all-solid secondary battery 1. If (e.g., when) the first anode active material layer 22 has a too large thickness, energy density of the all-solid secondary battery 1 may decrease, internal resistance of the all-solid secondary battery 1 may be increased by the first anode active material layer 22, making it difficult to improve cycle characteristics of the all-solid secondary battery 1. If (e.g., when) the thickness of the first anode active material layer 22 decreases, for example, an initial charging capacity of the first anode active material layer 22 may also decrease.

### Anode: Second Anode Active Material Layer

Referring to FIG. 3, the all-solid secondary battery 1 may further include, for example, a second anode active material layer 24 disposed between the anode current collector 21 and the first anode active material layer 22 after charging. The second anode active material layer 24 may be a metal layer including lithium or a lithium alloy. The metal layer may include lithium or a lithium alloy. Therefore, the second anode active material layer 24, as a metal layer including lithium, may serve as a reservoir of lithium. The lithium alloy may be, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloys commonly available in the art may also be utilized. The second anode active material layer 24 may be formed of one of the alloys alone, lithium, or a combination of one or more suitable types (kinds) of alloys. The second anode active material layer 24 may be, for example, a plated layer. For example, the second anode active material layer 24 may be plated between the first anode active material layer 22 and the anode current collector 21 during a charging and discharging process of the all-solid secondary battery 1.

A thickness of the second anode active material layer 24 is not limited, but may be, for example, from about 1 µm to about 500 µm, from about 1 µm to about 200 µm, from about 1 µm to about 150 µm, from about 1 µm to about 100 µm, or from about 1 µm to about 50 µm. If (e.g., when) the thickness of the second anode active material layer 24 is too small, the function of the second anode active material layer 24 as a reservoir of lithium may be difficult to obtain. When If (e.g., when) the thickness of the second anode active material layer 24 is too large, the mass and volume of the all-solid secondary battery 1 increase, and thus cycle characteristics of the all-solid secondary battery 1 may deteriorate.

In some embodiments, in the all-solid secondary battery 1, the second anode active material layer 24 may be disposed between the anode current collector 21 and the first anode active material layer 22 before assembling the all-solid secondary battery 1. If (e.g., when) the second anode active material layer 24 is disposed between the anode current collector 21 and the first anode active material layer 22 before assembling the all-solid secondary battery 1, the second anode active material layer 24, as a metal layer including lithium, may serve as a reservoir of lithium. For example, before assembling the all-solid secondary battery 1, a lithium foil may be disposed between the anode current collector 21 and the first anode active material layer 22.

If (e.g., when) the second anode active material layer 24 is plated by charging after assembling the all-solid secondary battery 1, energy density of the all-solid secondary battery 1 may increase because the second anode active material layer 24 is not included while the all-solid secondary battery 1 is assembled. While the all-solid secondary battery 1 is charged, charging may be performed to exceed the charging capacity of the first anode active material layer 22. For example, the first anode active material layer 22 may be overcharged. During initial charging, lithium may be absorbed to the first anode active material layer 22. The anode active material included in the first anode active material layer 22 may form an alloy or compound with lithium ions that have migrated from the cathode 10. If (e.g., when) the first anode active material layer 22 is overcharged to exceed the capacity thereof, lithium may be plated on a rear surface of the first anode active material layer 22, i.e., between the anode current collector 21 and the first anode active material layer 22, and a metal layer corresponding to the second anode active material layer 24 may be formed by the plated lithium. The second anode active material layer 24 may be a metal layer mainly composed of lithium (i.e., lithium metal). These results may be obtained because the anode active material included in the first anode active material layer 22 includes a material forming an alloy or compound with lithium. During discharging, lithium of the first anode active material layer 22 and the second anode active material layer 24, i.e., the metal layer, may be ionized to migrate in a direction toward the cathode 10. Therefore, it may be possible to utilize lithium as an anode active material in the all-solid secondary battery 1. For example, the first anode active material layer 22 may serve as a protective layer for the second anode active material layer 24, i.e., the metal layer, to prevent or reduce formation and growth of lithium dendrite, because the second anode active material layer 24 is coated with the first anode active material layer 22. Therefore, a short circuit and capacity reduction may be inhibited in the all-solid secondary battery 1, and thus cycle characteristics of the all-solid secondary battery 1 are improved. If (e.g., when) the second anode active material layer 24 is disposed by charging after assembling the all-solid secondary battery 1, the anode 20, i.e., the anode current collector 21, the first anode active material layer 22, and a region therebetween, may be a Li-free region not including lithium (Li) in the early stage of charging or after completely discharging the all-solid secondary battery 1.

### Anode: Anode Current Collector

The anode current collector 21 may be formed of, for example, a material that does not react with lithium, i.e., a material that does not form an alloy and compound with lithium. The material constituting the anode current collector 21 may be, for example, copper (Cu), stainless steel, titanium (Ti), iron (Fe), cobalt (Co), and nickel (Ni), but is not limited thereto, and any materials commonly available in the art as electrode current collectors may also be utilized. The anode current collector 21 may be formed of one metal selected from those described above or an alloy or coating material of two or more metals. The anode current collector 21 may be, for example, in the form of a plate or foil.

Referring to FIG. 2, the all-solid secondary battery 1 may further include a thin film 23 including an element capable of forming an alloy with lithium on one side of the anode current collector 21. The thin film 23 may be disposed between the anode current collector 21 and the first anode active material layer 22. The thin film 23 may include, for example, an element capable of forming an alloy with lithium. Examples of the element capable of forming an alloy with lithium include gold, silver, zinc, tin, indium, silicon, aluminum, and bismuth, but are not limited thereto, and any elements capable of forming an alloy with lithium suitable in the art may also be utilized. The thin film 23 may be formed of any one of the metals or an alloy of one or more suitable types (kinds) of metals. By disposing the thin film 23 on one surface of the anode current collector 21, the second anode active material layer 24 plated between the thin film 23 and the first anode active material layer 22 may become flatter, thereby further improving cycle characteristics of the all-solid secondary battery 1.

For example, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than 1 nm, the function of the thin film 23 may be difficult to obtain. If (e.g., when) the thickness of the thin film 23 is too large, the thin film 23 absorbs lithium and an amount of plated lithium decreases in the anode, and thus energy density of the all-solid secondary battery 1 may decrease and cycle characteristics of the all-solid secondary battery 1 may deteriorate. The thin film 23 may be formed on the anode current collector 21 by, for example, vacuum deposition, sputtering, or plating. However, the method is not limited thereto and any method commonly utilized in the art to form a thin film 23 may also be utilized.

In one or more embodiments, the anode current collector 21 may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The polymer may be an insulating polymer. If (e.g., when) the base film includes an insulating thermoplastic polymer, the base film may soften or liquefy in the event of a short circuit to stop the operation of a battery, thereby inhibiting a rapid increase in currents. The metal layer may include, for example, copper (Cu), stainless steel, titanium (Ti), iron (Fe), cobalt (Co), nickel (Ni), or an alloy thereof. The anode current collector 21 may further include a metal chip and/or a lead tab. For detailed descriptions of the base film, the metal layer, the metal chip, and the lead tab of the anode current collector 21, refer to the above-described cathode current collector 11. If (e.g., when) the anode current collector 21 has the above-described structure, the weight of the anode may be reduced, so that energy density of the anode and the lithium battery may be increased.

### Anode Layer: Second Inactive Member

Referring to FIGS. 6 to 7, the all-solid secondary battery 1 may further include a second inactive member 50 disposed on the other side of the anode current collector 21.

The second inactive member 50 may be distinguished from the first inactive member 40 in that the second inactive member 50 has conductivity (e.g., is a conductor) by additionally including a conductive material. The second inactive member 50 may be, for example, a conductive flame-retardant inactive member.

For example, the conductive material may be graphite, carbon black, acetylene black, Ketjen black, Denka black, carbon fiber, carbon nanotube (CNT), graphene, metal fiber, or metal powder. The second inactive member 50 may have an electronic conductivity of, for example, 100 times or more, 1000 times or more, or 10000 times or more that of an electronic conductivity of the first inactive member 40 at 25 °C.

The second inactive member 50 may include, for example, a matrix, a filler, and a conductive material. The matrix may include, for example, a substrate and a reinforcement. The second inactive member 50 may further include a filler, a binder, and/or the like. An amount of the conductive material included in the second inactive member 50 may be, for example, from about 1 part by weight to about 30 parts by weight, from about 1 part by weight to about 20 parts by weight, from about 1 part by weight to about 15 parts by weight, from about 1 part by weight to about 10 parts by weight, from about 5 parts by weight to about 40 parts by weight, from about 5 parts by weight to about 30 parts by weight, or from about 5 parts by weight to about 35 parts by weight based on 100 parts by weight of the second inactive member 50.

The second inactive member 50 may have, for example, a Young's modulus smaller than that of the anode current collector 21. The Young's modulus of the second inactive member 50 may be, for example, 50 % or less, 30 % or less, 10 % or less, or 5 % or less of the Young's modulus of the anode current collector 21. The Young's modulus of the second inactive member 50 may be, for example, from about 0.01 % to about 50 %, from about 0.1 % to about 30 %, from about 0.1 % to about 10 %, or from about 1 % to about 5 % of the Young's modulus of the anode current collector 21. The Young's modulus of the second inactive member 50 may be, for example, 100 MPa or less, 50 MPa or less, 30 MPa or less, 10 MPa or less, or 5 MPa or less. The Young's modulus of the second inactive member 50 may be, for example, from about 0.01 MPa to about 100 MPa, from about 0.1 MPa to about 50 MPa, from about 0.1 MPa to about 30 MPa, from about 0.1 MPa to about 10 MPa, or from about 1 MPa to about 5 MPa.

If (e.g., when) the second inactive member 50, 50a, or 50b has conductivity (e.g., is a conductor), the function as the second inactive member 50 may be performed. A volume change of the anode layer 20 may be more effectively accommodated during charging and discharging of the all-solid secondary battery 1 because the second inactive member 50 has a lower Young's modulus than that of the anode current collector 21. As a result, the second inactive member 50 may effectively reduce internal stress caused by the volume change of the all-solid secondary battery 1 during charging and discharging of the all-solid secondary battery 1, and thus cycle characteristics of the all-solid secondary battery 1 may further be improved.

A thickness of the second inactive member 50 may be, for example, greater than that of the first anode active material layer 22. The volume change of the anode 20 may be more effectively accommodated during charging and discharging, because the second inactive member 50 has a greater thickness that that of the first anode active material layer 22. A thickness of the first anode active material layer 22 may be 50 % or less, 40 % or less, 30 % or less, 20 % or less, or 10 % or less of the thickness of the second inactive member 50. The thickness of the first anode active material layer 22 may be, for example, about 1 % to about 50 %, about 1 % to about 40 %, about 1 % to about 30 %, about 1 % to about 20 %, or about 1 % to about 10 % of the thickness of the second inactive member 50. The thickness of the second inactive member 50 may be, for example, from about 1 µm to about 300 µm, from about 10 µm to about 300 µm, from about 50 µm to about 300 µm, or from about 100 µm to about 200 µm. If (e.g., when) the second inactive member 50 has a too small thickness, the intended effects thereof may not be provided. If (e.g., when) the second inactive member 50 has a too large thickness, energy density of the all-solid secondary battery 1 may decrease. A shape of the second inactive member 50 is not limited and may be selected according to a shape of the all-solid secondary battery 1. The second inactive member 50 may be, for example, in the form of a sheet, a rod, or a gasket. The second inactive member 50 may be disposed on one surface or both (e.g., simultaneously) surfaces of one all-solid secondary battery 1. The second inactive member 50 may be disposed, for example, between a plurality of stacked all-solid secondary batteries 1. For example, the second inactive member 50 may be disposed between the stacked plurality of all-solid secondary batteries 1, an uppermost surface, and/or a lowermost surface.

### Electrolyte Layer

### Electrolyte Layer: Electrolyte

Referring to FIGS. 3 to 7, the electrolyte layer 30 may include an electrolyte disposed between the cathode 10 and the anode 20. The electrolyte may include, for example, a solid electrolyte, a gel electrolyte or a combination thereof.

The solid electrolyte may include, for example, a sulfide-based solid electrolyte, an oxide-based solid electrolyte, a polymer solid electrolyte, or any combination thereof.

The solid electrolyte may be, for example, a sulfide-based solid electrolyte. For descriptions of the sulfide-based solid electrolyte, refer to the above-described dry cathode film.

The oxide-based solid electrolyte may be, for example, Li_{1+x+y}AlₓTi₂₋ₓSi_{y}P_{3-y}O₁₂ (wherein 0<x<2 and 0≤y<3), BaTiO₃, Pb(Zr,Ti)O₃ (PZT), Pb₁₋ₓLaₓZr_{1-y}Ti_{y}O₃ (PLZT, wherein 0≤x<1 and 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (wherein M = Te, Nb, or Zr, and 0≤x≤10), or any combination thereof. The oxide-based solid electrolyte may be manufactured, for example, by a sintering method, and/or the like.

For example, the oxide-based solid electrolyte may be, for example, a garnet-type or kind solid electrolyte selected from Li₇La₃Zr₂O₁₂ (LLZO) and Li₃₊ₓLa₃Zr₂₋ₐMₐO₁₂ (M doped LLZO, wherein M=Ga, W, Nb, Ta, or Al, 0<a<2, and 0≤x≤10).

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. The polymer solid electrolyte may not include (e.g., may exclude) a liquid. The polymer solid electrolyte may include a polymer. The polymer may be, for example, polyethylene oxide (PEO), polyvinylidene fluoride (PVDF), polyvinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or any combination thereof, but is not limited thereto, and any compounds commonly utilized in the art as polymer electrolytes may be utilized. The lithium salt may also be any lithium salt commonly utilized in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are from 1 to 20, respectively), LiCl, Lil, or any mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1000 Dalton (Da) or more, 10,000 Da or more, 100,000 Da or more, or 1,000,000 Da or more.

The gel electrolyte may be, for example, a polymer gel electrolyte. The gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolytes. The ionic liquid may refer to a salt in a liquid state at room temperature composed solely of ions and having a melting point room temperature or a molten salt at room temperature. The ionic liquid may include, for example, at least one compound including a) at least one cation selected from among ammonium, pyrrolidinium, pyridinium, pyrimidium, imidazolium, piperidinium, pyrazolium, oxazolium, pyridazinium, phosphonium, sulfonium, triazolium, and any mixture thereof, and b) at least one anion selected from among BF₄-, PF₆⁻, AsF₆⁻, SbF₆⁻, AlCl₄⁻, HSO₄⁻, ClO₄⁻, CH₃SO₃⁻, CF₃CO₂⁻, CI-, Br, I-, SO₄⁻, CF₃SO₃⁻, (FSO₂)₂N-, (C₂F₂SO₂)₂N-, (C₂F₅SO₂)(CF₃SO₂)N-, and (CF₃SO₂)₂N-. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1000 Da or more, 10,000 Da or more, 100,000 Da or more, or 1,000,000 Da or more.

### Electrolyte Layer: Binder

The electrolyte layer 30 may include, for example, a binder. The binder included in the electrolyte layer 30 may be, for example, styrene butadiene rubber (SBR), polytetrafluoroethylene, polyvinylidene fluoride, or polyethylene, but is not limited thereto, and any binders commonly available in the art may also be utilized. The binder of the electrolyte layer 30 may be the same as or different from the binders included in the cathode active material layer 12 and the first anode active material layer 22. The binder may not be provided.

An amount of the binder included in the electrolyte layer 30 may be from about 0.1 wt% to about 10 wt%, from about 0.1 wt% to about 5 wt%, from about 0.1 wt% to about 3 wt%, from about 0.1 wt% to about 1 wt%, from about 0 wt% to about 0.5 wt%, or from about 0 wt% to 0.1 wt%, based on a total weight of the electrolyte layer 30.

Hereinafter, one or more example embodiments of the present disclosure will be described in more detail with reference to the following examples and comparative examples. However, these examples are not intended to limit the purpose and scope of the one or more example embodiments.

### Preparation of Cathode Active Material

### Preparation Example 1: Li₂S-Lil-CNF Composite

### First Process

Li₂S and LiI were mixed in a weight ratio 30:20. The mixture was mechanically milled by utilizing a ball mill to prepare a Li₂S-LiI composite. Milling conditions were 25 °C, 600 rpm, and 10 hours. A milling energy applied to a sample during milling was 28 G.

### Second Process

The Li₂S-LiI composite was mixed with carbon nanofibers (CNFs) in a weight ratio of 50:10. The mixture was mechanically milled by utilizing a ball mill to prepare a Li₂S-LiI-CNF composite. Milling conditions were 25 °C, 600 rpm, and 10 hours. A milling energy applied to a sample during milling was 28 G. The Li₂S-LiI-CNF composite was utilized as a cathode active material.

Li₂S had a Mohs hardness of 0.6, LiI had a Mohs hardness of 2.0, and CNFs had a Mohs hardness of 1.5.

### Comparative Preparation Example 1: S-CNT-LisPSsCI Composite

### First Process

Sulfur (S) and CNTs were mixed in a weight ratio of 25:25. The mixture was mechanically milled by utilizing a ball mill to prepare a S-CNT composite. Milling conditions were 25 °C, 600 rpm, and 10 hours.

### Second Process

The S-CNT composite and Li₆PS₅Cl were mixed in a weight ratio of 50:50. The mixture was mechanically milled by utilizing a ball mill to prepare a S-CNT-Li₆PS₅Cl composite. Milling conditions were 25 °C, 600 rpm, and 10 hours.

The S-CNT-Li₆PS₅Cl composite was utilized as a cathode active material.

### Preparation of Dry Cathode Film, Dry Cathode, and All-solid Secondary Battery

### Example 1: Dry, Li₂S-LiI-CNF:SE:PTFE=60:39:1

### Preparation of Dry Cathode Film

The Li₂S-LiI-CNF composite prepared in Preparation Example 1 was prepared as a dry cathode active material. As a dry solid electrolyte, Li₆PS₅Cl (D50=3.0 µm, crystalline) that is argyrodite-type or kind crystal was prepared. As a dry binder, PTFE was prepared.

The dry cathode active material and the dry solid electrolyte were prepared in a weight ratio of 60:39, added to a blade mixer, and mixed for 2 minutes to prepare a first mixture.

The first mixture and the dry binder were prepared in a weight ratio of 99:1, added to a blade mixer, and mixed for 20 seconds to prepare a second mixture.

The second mixture was further mixed by utilizing a kneader and passed through a calender roll to prepare a dry cathode film (self-standing film) in a sheet form having a thickness of about 100 µm.

In the dry cathode film, a weight ratio of cathode active material: solid electrolyte: binder was 60: 39: 1. During the additional mixing process utilizing the kneader and the calendaring process, fibrilization proceeded.

### Preparation of Dry Cathode

The dry cathode film was disposed on one side of a cathode current collector formed of an Al foil coated with carbon to prepare a dry cathode. A thickness of the carbon-coated Al foil was about 20 µm. A thickness of the carbon coating layer was about 1 µm.

An area of the cathode active material layer (dry cathode film) was identical to an area of the cathode current collector.

### Preparation of Anode

An SUS foil having a thickness of 10 µm was prepared as an anode current collector. Carbon black (CB) with a primary particle diameter of about 30 nm and particles of silver (Ag) with an average particle diameter of about 60 nm were prepared as anode active materials.

4 g of a powder mixture of the carbon black (CB) and silver (Ag) particles in a weight ratio of 3:1 was added to a container, and 4 g of an N-methyl-2-pyrrolidone (NMP) solution including 7 wt% of a PVDF binder (# 9300 manufactured by Kureha Corporation) was added thereto to prepare a mixed solution. NMP was gradually added to the mixed solution while stirring to prepare a slurry. The prepared slurry was applied to the SUS sheet utilizing a bar coater and dried in the air at 80 °C for 10 minutes, and then dried in a vacuum at 40 °C for 10 hours to prepare a stack structure. The surface of the prepared stack structure was planarized by a cold roll press to prepare an anode having a first anode active material layer/anode current collector structure. A thickness of the first anode active material layer was about 15 µm. An area of the first anode active material layer was identical to that of the anode current collector.

### Preparation of Solid Electrolyte Layer

Li₆PS₅Cl solid electrolyte (D₅₀=3.0 µm, crystalline) that is argyrodite-type or kind crystal was prepared. 1.5 parts by weight or an acrylic binder was added to 98.5 parts by weight of the solid electrolyte to prepare a mixture. Octyl acetate was added to the prepared mixture while stirring to prepare a slurry. The prepared slurry was applied to a 15 µm-thick non-woven fabric placed on a 75 µm-thick PET substrate by utilizing a bar coater, and dried in the air at 80 °C for 10 minutes to obtain a stack structure. The prepared stack structure was dried in a vacuum at 80 °C for 2 hours, and a solid electrolyte layer was separated from the PET substrate to prepare a solid electrolyte layer.

### First Inactive Member

A slurry prepared by mixing pulp fibers (cellulose fibers), glass fibers, aluminum hydroxide (Al(OH)₃), an acrylic binder, and a solvent was formed in a gasket form, and the solvent was removed therefrom to prepare a flame-retardant inactive member.

A weight ratio of the pulp fibers (cellulose fibers), glass fibers, aluminum hydroxide (Al(OH)₃), and the acrylic binder was 20:8:70:2. The inactive member had a thickness of 120 µm.

Before arranging the prepared flame-retardant inactive member on the solid electrolyte layer, heat treatment was performed in a vacuum at 80 °C for 5 hours to remove moisture and/or the like from the flame-retardant inactive member.

### Second Inactive Member

A second inactive member was prepared in substantially the same manner as the method of preparing the first inactive member, except that the slurry including pulp fibers (cellulose fibers), glass fibers, aluminum hydroxide (Al(OH)₃), the acrylic binder, and the solvent was formed in a sheet form.

The second inactive member may serve as an elastic sheet.

### Preparation of All-solid Secondary Battery

Referring to FIG. 3, the solid electrolyte layer was disposed on the anode such that the first anode active material layer was in contact with the solid electrolyte layer, and the cathode was disposed on the solid electrolyte layer. A gasket was arranged around the cathode to surround the cathode and to be in contact with the solid electrolyte layer to prepare a stack structure. The gasket had a thickness of about 120 µm. As the gasket, the flame-retardant inactive member was utilized. The gasket was located to be in contact with side surfaces of the cathode and the solid electrolyte layer. The cathode was located at a central region of the solid electrolyte layer, and the gasket was located to surround the cathode and to extend to an end portion of the solid electrolyte layer. An area of the cathode was about 90 % of an area of the solid electrolyte layer, and the gasket was located over the entire area of the remaining 10 % area of the solid electrolyte layer on which the cathode was not located. The gasket was the first inactive member.

The prepared stack structure was pressed by a plate press at 85 °C at a pressure of 500 MPa for 30 minutes. By such pressing treatment, the solid electrolyte layer was sintered to improve battery characteristics. The sintered solid electrolyte layer had a thickness of about 45 µm. The argyrodite-type or kind crystalline Li₆PS₅Cl solid electrolyte included in the sintered solid electrolyte layer had a density of 1.6 g/cc. An area of the solid electrolyte layer was the same as an area of the anode.

The second inactive member having the same area and shape as those of the stack structure was additionally disposed on the outer surface of the anode current collector of the pressed stack structure.

The stack structure additionally provided with the second inactive member was added into a pouch and vacuum sealed to prepare an all-solid secondary battery. Portions of the cathode current collector and the anode current collector were extended to the outside of the sealed battery to be utilized as a cathode terminal and an anode terminal.

### Example 2: Dry, Li₂S-LiI-CNF:SE:PTFE=70:29:1

A dry cathode film, a dry cathode, and an all-solid secondary battery were prepared in substantially the same manner as in Example 1, except that the weight ratio of the cathode active material:solid electrolyte: binder was 70:29:1 in the dry cathode film.

### Example 3: Dry, Li₂S-LiI-CNF:SE:PTFE=80:19:1

A dry cathode film, a dry cathode, and an all-solid secondary battery were prepared in substantially the same manner as in Example 1, except that the weight ratio of the cathode active material:solid electrolyte: binder was 80:19:1 in the dry cathode film.

### Example 4: Dry, Li₂S-LiI-CNF:SE:PTFE=60:38:2

A dry cathode film, a dry cathode, and an all-solid secondary battery were prepared in substantially the same manner as in Example 1, except that the weight ratio of the cathode active material:solid electrolyte: binder was 60: 38: 2 in the dry cathode film.

### Reference Example 1

An all-solid secondary battery was prepared in substantially the same manner as in Example 1, except that the first inactive member was omitted.

### Reference Example 2

An all-solid secondary battery was prepared in substantially the same manner as in Example 1, except that the second inactive member was omitted.

### Comparative Example 1: Wet, Li₂S-LiI-CNF:SE:PVDF-HFP=60:39:1

An all-solid secondary battery was prepared in substantially the same manner as in Example 1, except that a wet cathode was prepared according to the following method.

### Preparation of Wet Cathode

The Li₂S-LiI-CNF composite prepared in Preparation Example 1 was utilized as a cathode active material. As a solid electrolyte, Li₆PS₅Cl (D50=3.0 µm, crystalline) that is argyrodite-type or kind crystal was prepared. A PVDF-HFP solution was prepared as a binder. Octyl acetate was added to a mixture of the cathode active material, the solid electrolyte, and the binder mixed in a weight ratio of 60:39:1 while stirring to prepare a cathode active material slurry.

The cathode active material slurry was applied to one side of an Al foil cathode current collector having a thickness of 20 µm and dried, and then dried in a vacuum oven at 80 °C for 4 hours to prepare a stack structure in which the cathode active material layer was disposed on the cathode current collector.

An area of the cathode active material layer was identical to an area of the cathode current collector.

### Comparative Example 2: Dry, S-CNT-Li₆PS₅Cl:PTFE=99:1

An all-solid secondary battery was prepared in substantially the same manner as in Example 1, except that a dry cathode was prepared according to the following method.

### Preparation of Dry Cathode

The S-CNT-Li₆PS₅Cl composite prepared in Comparative Preparation Example 1 was prepared as a dry cathode active material. As a dry binder, PTFE was prepared.

The dry cathode active material and the dry binder were prepared in a weight ratio of 99:1 and added to a blade mixer, followed by mixing for 5 minutes to prepare a mixture.

The mixture was disposed on one side of a stainless steel (SUS) substrate and rolled to prepare a dry cathode.

### Comparative Example 3: Dry, Binder-free

A dry cathode film was prepared in substantially the same manner as in Example 1, except that the binder was not utilized.

### Evaluation Example 1: XRD Analysis and SEM Analysis

Bare Li₂S and pulverized Li₂S utilized in Preparation Example 1 and the Li₂S-Lil-C composite prepared in Example 1 were evaluated by measuring XRD spectra via Cu Kα radiation. Measurement results are shown in Table 1. Sizes of Li₂S crystallites and lattice constants were derived from first peaks observed at a diffraction angle (2θ) of 27° ± 2.0° corresponding to crystal plane (111) in the obtained XRD spectra.

The pulverized Li₂S was prepared by milling under the same conditions as those of the first process of Preparation Example 1, except that the amount of Li₂S was changed to 50 parts by weight in the mixture of Li₂S and LiI mixed in a weight ratio of 30:20. The second process was not performed.

The bare Li₂S and pulverized Li₂S utilized in Preparation Example 1, and the Li₂S-LiI-CNF composite prepared in Example 1 were evaluated by measuring particle sizes (i.e., D50 particle diameter) of the composites and particles sizes of Li₂S of the composite by utilizing a particle size analyzer (PSA) utilizing a laser and a scanning electron microscope (SEM). Measurement results are shown in Table 1.

**Table 1**

| | Size of Li₂S crystallites [nm] | Size of Li₂S particles [µm] |
|---|---|---|
| Bare Li₂S | 64.67 | 8 |
| Pulverized Li₂S | 15.42 | - |
| Preparation Example 1 (Li₂S-LiI-CNF Composite) | 9.86 | Less than 1 |

As shown in Table 1, the sizes of Li₂S particles and crystallites of the Li₂S-Lil-CNF composite of Preparation Example 1 were significantly decreased compared to those of bare Li₂S.

Although not shown in Table 1, the Li₂S-LiI-CNF composite of Preparation Example 1 had a lattice constant greater than that of the bare Li₂S.

It was considered that the increased lattice constant of the Li₂S-LiI-CNF composite compared to the lattice constant of the bare Li₂S was caused by LiI dissolved in the Li₂S crystals. Therefore, it was confirmed that a solid solution of Li₂S and LiI was formed in the Li₂S-LiI-CNF composite.

Although not shown in Table 1, the composite of Preparation Example 1 had a particle size of about 5 µm.

### Evaluation Example 2: Measurement of Tensile Strength at Break

Tensile strengths at break of the dry cathode films prepared in Example 1 and Comparative Example 3 were measured according to the ASTM D412 method, and results are shown in Table 2.

The wet cathode prepared in Comparative Example 1 could not form a self-standing film, and thus a tensile strength at break could not be measured.

The prepared dry cathode film was cut into strip sample having a width of 15 mm and a length of 50 mm, and both (e.g., simultaneously) ends of each sample in the longitudinal direction were grasped in a tensile strength tester such that a distance between chucks was set to 10 mm. Then, tensile strength was measured at a temperature of 23 °C at a speed of 5 mm/min to obtain a tensile strength at break [kPa]. Measurement results are shown in Table 2.

**Table 2**

| | Tensile strength at break [kPa] |
|---|---|
| Example 1 (PTFE 1wt%) | 923 |
| Comparative Example 3 (PTFE 0 wt%) | Impossible to measure |

As shown in Table 2, the dry cathode film of Example 1 exhibited excellent or suitable tensile strength.

In the dry cathode film of Example 1, dispersity of the dry binder was improved, and uniformity of binding between the cathode active material and the dry binder was improved. As a result, overall mechanical strength of the cathode film of Example 1 was improved.

Mechanical strength significantly deteriorated in the dry cathode film of Comparative Example 3 not including a binder, and thus it was not possible to measure mechanical strength.

### Evaluation Example 2: Measurement of Surface Resistivity

Surface resistivities of the dry cathode films prepared in Example 1 and Comparative Example 2 were measured by utilizing a 4-probe method according to the ASTM D257 method, and results are shown in Table 3.

**Table 3**

| | | Surface resistivity [Ω/sq] |
|---|---|---|
| Example 1 (Dry, Li₂S-LiI-CNF:SE:PTFE=60:39:1) | | 32 |
| Comparative Example 2 (S-CNT-Li₆PS₅CI:PTFE=99:1) | | 81.3 |

As shown in Table 3, the dry cathode film of Example 1 had a lower surface resistivity than that of the dry cathode film of Comparative Example 2.

It was considered that the dry cathode film of Comparative Example 2 including sulfur (S) as the cathode active material had higher surface resistivity than that of the dry cathode film of Example 1 including the Li₂S-lithium salt-carbonaceous material composite as a cathode active material.

Sulfur (S) had an electronic conductivity of ∼10⁻³⁰ S/cm which is lower than the electronic conductivity (∼10⁻¹³ S/cm) of the Li₂S.

### Evaluation Example 3: Charging/discharging Test

Charging and discharging characteristics of the all-solid secondary batteries prepared in Examples 1 to 4 and Comparative Examples 1 to 2 were evaluated by the following charging/discharging test. The charging/discharging test was performed by placing the all-solid secondary batteries in a thermostatic bath at 45°C.

A first cycle was performed by charging at a constant current of 0.05 C for 20 hours until a battery voltage reached 2.8 V. Subsequently, the battery was discharged at a constant current of 0.05 C for 20 hours until the battery voltage reached 1.0 V.

A second cycle was performed by charging at a constant current of 0.05 C for 20 hours until a battery voltage reached 2.8 V. Subsequently, the battery was discharged at a constant current of 0.05 C for 20 hours until the battery voltage reached 1.0 V.

A third cycle was performed at a constant current of 0.1 C for 10 hours until the battery voltage reached 2.8 V. Subsequently, the battery was discharged at a constant current of 0.1 C for 10 hours until the battery voltage reached 1.0 V.

From the fourth cycle, 20 cycles of charging and discharging were performed under the same conditions as those of the third cycle. Measurement results are shown in Table 2. Capacity retention ratio is defined as shown Equation 1. Capacity Retention Ratio [%] = [discharge capacity of 23rd cycle /charge capacity of 3rd cycle] × 100

**Table 4**

| | Discharge capacity [mAh/g] of 2^{nd} cycle (0.05 C) | Capacity Retention Ratio [%] |
|---|---|---|
| Example 1: Dry, Li₂S-LiI-CNF:SE:PTFE=60:39:1 | 915 | 86.5 |
| Example 2: Dry, Li₂S-LiI-CNF:SE:PTFE=70:29:1 | 939 | 80.7 |
| Example 3 (Dry, Li₂S-LiI-CNF:SE:PTFE=80:19:1) | 868 | 84.2 |
| Example 4 (Dry, Li₂S-LiI-CNF:SE:PTFE=60:38:2) | 805 | 85.2 |
| Comparative Example 1 (Wet, Li₂S-LiI-CNF:SE:PVDF-HFP=60:39:1) | 758 | 74.0 |
| Comparative Example 2 (Dry, S-CNT-Li₆PS₅CI:PTFE=99:1) | 670 | 72.2 |

As shown in Table 4, the all-solid secondary batteries of Example 1 to 4 utilizing the dry cathode exhibited improved discharge capacity and lifespan characteristics compared to the all-solid secondary battery of Comparative Example 1 utilizing the wet cathode.

Therefore, it was confirmed that the dry cathode provided improved reversibility of electrode reaction because the dry cathode has a lower internal resistance than the wet cathode.

The all-solid secondary batteries of Examples 1 to 4 utilizing the Li₂S-LiI-CNF composite cathode active material exhibited improved discharge capacity and lifespan characteristics compared to the all-solid secondary battery of Comparative Example 2 utilizing the S-CNT-Li₆PS₅Cl composite cathode active material.

Therefore, it was confirmed that the Li₂S-lithium salt-carbonaceous material composite provided improved charging and discharging characteristics compared to the S-solid electrolyte-carbonaceous material composite.

Although not shown in Table 2, the all-solid secondary battery of Reference Example 1 not including the first inactive member and the all-solid secondary battery of Reference Example 2 not including the second inactive member exhibited relatively inferior lifespan characteristics to those of the all-solid secondary battery of Example 1.

In some embodiments, it was confirmed that a lithium metal layer, which is a second anode active material layer, was formed between the first anode active material layer and the anode current collector after initial charging in the all-solid secondary batteries of Examples 1 to 4. The formation of the second anode active material layer was confirmed by a cross-sectional image of the all-solid secondary battery obtained by an SEM.

According to aspects, a dry cathode film having improved mechanical properties and reduced specific resistivity may be provided by including a Li₂S-lithium salt-carbonaceous material composite and a dry binder that binds these materials.

By including the dry cathode film, an all-solid secondary battery having increased specific capacity and improved cycle characteristics may be provided.

In present disclosure, "not include a or any 'component'", "exclude a or any 'component'", "'component'-free", and/or the like refers to that the "component" not being added, selected or utilized as a component in the composition, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. A dry cathode film comprising:
   a dry cathode active material; a dry sulfide-based solid electrolyte; and a dry binder,
   wherein the dry cathode active material comprises a composite of Li₂S, a lithium salt (LiₐX_{b}), and a carbonaceous material (C),
   the composite of Li₂S, a lithium salt, and a carbonaceous material is represented by Li₂S-LiₐX_{b}-C (wherein 1≤a≤5 and 1≤b≤5), and
   X is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof.
Clause 2. The dry cathode film of clause 1, wherein sizes of Li₂S crystallites obtained in an XRD spectrum of the composite are 20 nm or less, and
   the composite comprises a solid solution of Li₂S and a lithium salt.
Clause 3. The dry cathode film of clause 1 or clause 2, wherein the lithium salt is a binary compound or a ternary compound,
   wherein the binary compound comprises Lil, LiBr, LiCI, LiF, LiH, Li₂O, Li₂Se, Li₂Te, Li₃N, Li₃P, Li₃As, Li₃Sb, Li₃Al₂, LiB₃, or a combination thereof, and
   the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, LisNCl₂, Li₃BN₂, or a combination thereof.
Clause 4. The dry cathode film of any one of clauses 1 to 3, wherein a molar ratio of the Li₂S to the lithium salt is from about 50:50 to about 95:5 in the composite.
Clause 5. The dry cathode film of any one of clauses 1 to 4, wherein the lithium salt and the carbonaceous material each have a Mohs hardness greater than that of the Li₂S, respectively, and
   the lithium salt and the carbonaceous material each have a Mohs hardness of 0.7 or more.
Clause 6. The dry cathode film of any one of clauses 1 to 5, wherein the carbonaceous material comprises a fibrous carbonaceous material,
   the fibrous carbonaceous material comprises a carbon nanostructure, wherein the carbon nanostructure comprises carbon nanofibers, carbon nanotubes, carbon nanobelts, carbon nanorods, or a combination thereof, and
   an amount of the carbonaceous material is from about 1 wt% to about 20 wt% based on a total weight of the composite.
Clause 7. The dry cathode film of any one of clauses 1 to 6, wherein the composite comprises about 50 parts by weight to about 80 parts by weight of the Li₂S, about 1 part by weight to about 40 parts by weight of the lithium salt, and about 1 part by weight to about 20 parts by weight of the carbonaceous material, based on 100 parts by weight of the composite.
Clause 8. The dry cathode film of any one of clauses 1 to 7, wherein sizes of the composite particles are 10 µm or less, and
   an amount of the composite is from about 50 wt% to about 80 wt% based on a total weight of the dry cathode film.
Clause 9. The dry cathode film of any one of clauses 1 to 8, wherein the dry sulfide-based solid electrolyte comprises at least one selected from Li₂S-P₂S₅, Li₂S-P₂S₅-LiX, wherein X is a halogen, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2,
   the sulfide-based solid electrolyte comprises an argyrodite-type solid electrolyte,
   the argyrodite-type solid electrolyte comprises at least one selected from Li₆PS₅Cl, Li₆PS₅Br, and LisPSsl, and
   the argyrodite-type solid electrolyte has a density of about 1.5 g/cc to about 2.0 g/cc.
Clause 10. The dry cathode film of any one of clauses 1 to 9, wherein the dry binder comprises a fibrillized binder,
   the dry binder comprises a fluorine-based binder,
   the dry binder has a glass transition temperature (T_{g}) of about 15 °C to about 130 °C, and
   an amount of the dry binder is from about 0.1 wt% to about 5 wt% based on a total weight of the dry cathode film.
Clause 11. The dry cathode film of any one of clauses 1 to 10, wherein the dry cathode film is a self-standing film,
   the dry cathode film is free from a residual processing solvent, and
   the dry cathode film has a thickness of about 50 µm to about 500 µm.
Clause 12. The dry cathode film of any one of clauses 1 to 11, wherein the dry cathode film has a tensile strength of about 500 kPa to about 5000 kPa, and
   the dry cathode film has a surface resistivity of 70 Ω/sq or less.
Clause 13. A dry cathode comprising:
   a cathode current collector; and
   the dry cathode film of any one of clauses 1 to 12 disposed one or both sides of the cathode current collector.
Clause 14. The dry cathode of clause 13, wherein the cathode current collector comprises a base film and a metal layer disposed on one or both sides of the base film,
   wherein the base film comprises a polymer, and the polymer comprises polyethyleneterephthalate (PET), polyethylene (PE), polypropylene (PP), polybutyleneterephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
   an interlayer is further disposed between the cathode current collector and the dry cathode film,
   wherein the interlayer comprises a carbonaceous conductive material.
Clause 15. An all-solid secondary battery comprising:
   a cathode; an anode; and an electrolyte layer disposed between the cathode and the anode,
   wherein the cathode is the dry cathode of clause 13 or clause 14, and
   the anode comprises an anode current collector and a first anode active material layer disposed on one side of the anode current collector.
Clause 16. The all-solid secondary battery of clause 15, wherein the first anode active material layer comprises an anode active material and a binder, wherein the anode active material is in the form of particles, and an average particle diameter of the anode active material is 4 µm or less.
Clause 17. The all-solid secondary battery of clauses 15 or clause 16, wherein the anode active material comprises at least one selected from a carbonaceous anode active material and a metal or metalloid anode active material,
   the carbonaceous anode active material comprises amorphous carbon, crystalline carbon, porous carbon, or a combination thereof,
   the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof,
   the anode active material comprises a mixture of first particles formed of amorphous carbon and second particles formed of a metal or metalloid, and
   an amount of the second particles is from about 1 wt% to about 60 wt% based on a total weight of the mixture.
Clause 18. The all-solid secondary battery of any one of clauses 15 to 17, further comprising a second anode active material layer disposed at least one of: between the anode current collector and the first anode active material; and between the anode current collector and an electrolyte layer,
   wherein the second anode active material layer is a metal layer, and the metal layer includes lithium or a lithium alloy.
Clause 19. The all-solid secondary battery of any one of clauses 15 to 18, wherein the electrolyte layer comprises a solid electrolyte, a gel electrolyte, or a combination thereof,
   the solid electrolyte comprises a sulfide-based solid electrolyte, an oxide-based solid electrolyte, a polymer solid electrolyte, or a combination thereof, and
   the gel electrolyte comprises a polymer gel electrolyte.
Clause 20. The all-solid secondary battery of any one of clauses 15 to 19, further comprising at least one of a first inactive member disposed on one side surface of the cathode and a second inactive member disposed on the other side of the anode,
   wherein the first inactive member and the second inactive member comprise a conductive flame-retardant inactive member.

## Claims

1. A dry cathode film comprising:
a dry cathode active material;
a dry sulfide-based solid electrolyte; and
a dry binder,
wherein the dry cathode active material comprises a composite of
Li₂S,
a lithium salt (LiₐX_{b}), and
a carbonaceous material (C),
the composite is represented by Li₂S-LiₐX_{b}-C (wherein 1≤a≤5 and 1≤b≤5), and
X is I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCI, NCl₂, BN₂, or a combination thereof.

2. The dry cathode film as claimed in claim 1, wherein sizes of Li₂S crystallites obtained in an X-ray diffraction (XRD) spectrum of the composite are 20 nm or less, and
the composite further comprises a solid solution of Li₂S and the lithium salt.

3. The dry cathode film as claimed in claim 1 or 2, wherein the lithium salt is a binary compound or a ternary compound,
wherein the binary compound comprises Lil, LiBr, LiCI, LiF, LiH, Li₂O, Li₂Se, Li₂Te, Li₃N, Li₃P, Li₃As, Li₃Sb, Li₃Al₂, LiB₃, or a combination thereof, and
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.

4. The dry cathode film as claimed in claims 1 to 3, wherein a molar ratio of the Li₂S to the lithium salt is from about 50:50 to about 95:5 in the composite.

5. The dry cathode film as claimed in claims 1 to 4, wherein the lithium salt and the carbonaceous material each have a Mohs hardness greater than the Li₂S, and
the lithium salt and the carbonaceous material each have a Mohs hardness of 0.7 or more.

6. The dry cathode film as claimed in claims 1 to 5, wherein the carbonaceous material comprises a fibrous carbonaceous material,
the fibrous carbonaceous material comprises a carbon nanostructure, wherein the carbon nanostructure comprises carbon nanofibers, carbon nanotubes, carbon nanobelts, carbon nanorods, or a combination thereof, and
an amount of the carbonaceous material is from about 1 wt% to about 20 wt% based on a total weight of the composite.

7. The dry cathode film as claimed in claims 1 to 6, wherein the composite comprises about 50 parts by weight to about 80 parts by weight of the Li₂S, about 1 part by weight to about 40 parts by weight of the lithium salt, and about 1 part by weight to about 20 parts by weight of the carbonaceous material, based on 100 parts by weight of the composite.

8. The dry cathode film as claimed in claims 1 to 7, wherein sizes of the composite particles are 10 µm or less, and
an amount of the composite is from about 50 wt% to about 80 wt% based on a total weight of the dry cathode film.

9. The dry cathode film as claimed in claims 1 to 8, wherein the dry sulfide-based solid electrolyte comprises at least one selected from among Li₂S-P₂S₅, Li₂S-P₂S₅-LiX, wherein X is a halogen, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2,
the sulfide-based solid electrolyte comprises an argyrodite-type solid electrolyte,
the argyrodite-type solid electrolyte comprises at least one selected from among Li₆PS₅Cl, Li₆PS₅Br, and LisPSsl, and
the argyrodite-type solid electrolyte has a density of about 1.5 g/cc to about 2.0 g/cc.

10. The dry cathode film as claimed in claims 1 to 9, wherein the dry binder comprises a fibrillized binder,
the dry binder comprises a fluorine-based binder,
the dry binder has a glass transition temperature (T_{g}) of about 15 °C to about 130 °C, and
an amount of the dry binder is from about 0.1 wt% to about 5 wt% based on a total weight of the dry cathode film.

11. The dry cathode film as claimed in claims 1 to 10, wherein
- the dry cathode film is a self-standing film,
the dry cathode film is free from a residual processing solvent, and
the dry cathode film has a thickness of about 50 µm to about 500 µm; and /or
- the dry cathode film has a tensile strength of about 500 kPa to about 5000 kPa, and
the dry cathode film has a surface resistivity of 70 Ω/sq or less.

12. A dry cathode (10) comprising:
a cathode current collector (11); and
the dry cathode film as claimed in claims 1 to 11 on at least one side of the cathode current collector (11); preferably the cathode current collector (11) comprises a base film and a metal layer on at least one side of the base film,
wherein the base film comprises a polymer, and the polymer comprises polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
an interlayer is further between the cathode current collector (11) and the dry cathode film, and
wherein the interlayer comprises a carbonaceous conductive material.

13. An all-solid secondary battery (1) comprising:
a cathode (10);
an anode (20); and
an electrolyte layer (30) between the cathode (10) and the anode (20),
wherein the cathode (10) is the dry cathode as claimed in claims 1 to 12, and
the anode (20) comprises an anode current collector (21) and a first anode active material layer (22) on at least one side of the anode current collector (21); preferably the first anode active material layer (22) comprises an anode active material and a binder, and wherein the anode active material (22) is in a form of particles, and an average particle diameter of the particles of the anode active material (22) is 4 µm or less;
and/or the anode active material (22) comprises at least one selected from among a carbonaceous anode active material and a metal or metalloid anode active material,
the carbonaceous anode active material comprises amorphous carbon, crystalline carbon, porous carbon, or a combination thereof,
the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof,
the anode active material (22) comprises a mixture of first particles of amorphous carbon and second particles of a metal or metalloid, and
an amount of the second particles is from about 1 wt% to about 60 wt% based on a total weight of the mixture.

14. The all-solid secondary battery (1) as claimed in claim 13, further comprising a second anode active material layer (24) on at least one of: between the anode current collector (21) and the first anode active material (22); or between the anode current collector (21) and an electrolyte layer (30),
wherein the second anode active material layer (24) is a metal layer, and the metal layer comprises lithium or a lithium alloy; and/or
wherein the electrolyte layer (30) comprises a solid electrolyte, a gel electrolyte, or a combination thereof,
the solid electrolyte comprises a sulfide-based solid electrolyte, an oxide-based solid electrolyte, a polymer solid electrolyte, or a combination thereof, and
the gel electrolyte comprises a polymer gel electrolyte.

15. The all-solid secondary battery (1) as claimed in claims 13 or 14, further comprising at least one of a first inactive member (40) on a first side surface of the cathode and a second inactive member (50) on a second side of the anode (20),
wherein the first inactive member (40) and the second inactive member (50) comprise a conductive flame-retardant inactive member.
